(19) Europäisches Patentamt
European Patent Office
Office européen des brevets

(11) **EP 1 925 094 B1**

(12) **EUROPEAN PATENT SPECIFICATION**

(45) Date of publication and mention
of the grant of the patent:
**06.01.2021 Bulletin 2021/01**

(21) Application number: **06814608.3**

(22) Date of filing: **12.09.2006**

(51) Int Cl.:
*H04B 1/00* *(2006.01)*     *H04B 1/403* *(2015.01)*

(86) International application number:
**PCT/US2006/035699**

(87) International publication number:
**WO 2007/033264 (22.03.2007 Gazette 2007/12)**

(54) **MULTI-BAND RADIO FREQUENCY MODULATOR**

MEHRBAND-HOCHFREQUENZMODULATOR

MODULATEUR DE FRÉQUENCE RADIO MULTIBANDES

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.09.2005 US 716537 P
07.06.2006 US 449444**

(43) Date of publication of application:
**28.05.2008 Bulletin 2008/22**

(73) Proprietor: **Qualcomm Incorporated
San Diego, CA 92121 (US)**

(72) Inventor: **SAHOTA, Gurkanwal, S.
San Diego, CA 92103 (US)**

(74) Representative: **Carstens, Dirk Wilhelm et al
Wagner & Geyer Partnerschaft mbB
Patent- und Rechtsanwälte
Gewürzmühlstraße 5
80538 München (DE)**

(56) References cited:
**US-A1- 2003 078 011     US-A1- 2003 193 923
US-A1- 2004 229 592     US-A1- 2005 168 281**

**Description**

**TECHNICAL FIELD**

The disclosure relates to wireless communication, and more particularly to radio frequency (RF) modulators in wireless communication devices.

**BACKGROUND**

A wide variety of wireless communication techniques have been developed to facilitate wireless telecommunication, including frequency division multiple access (FDMA), time division multiple access (TDMA) and various spread spectrum techniques. One common spread spectrum technique used in wireless communication is code division multiple access (CDMA) signal modulation in which multiple communications are simultaneously transmitted over a spread spectrum radio-frequency (RF) signal. Several mobile communication protocols use CDMA signal modulation, such as the CDMA family of standards and wideband CDMA (WCDMA) family of standards.

FDMA refers to a wireless communication technique in which an allocated frequency spectrum is divided into a plurality of smaller frequency cells. Each cell of the allocated spectrum has a carrier signal that can be modulated with data. TDMA refers to a wireless communication technique in which frequency cells are divided into time slots. In systems that implement TDMA techniques, different wireless communications are sent during specific time slots, and in some cases, time slots can be allocated for reservation-based communication. The global system for mobile communications (GSM) standard and the edge GSM (eGSM) standard, standardized by the European Telecommunication Standards Institute (ETSI), are examples of systems that make use of FDMA and TDMA techniques. The Universal Mobile Telecommunication System (UMTS) standard permits GSM or CDMA operation.

In this disclosure, a wireless communication device (WCD) refers to any device that can modulate wireless signals. Some example WCDs include cellular or satellite radiotelephones, radiotelephone base stations, computers that support one or more wireless networking standards, wireless access points for wireless networking, PCMCIA cards incorporated within portable computers, direct two-way communication devices, personal digital assistants (PDAs) equipped with wireless communication capabilities, and the like.

In wireless telecommunication, a sender device modulates information to create one or more baseband waveforms or baseband signals. The baseband waveforms may then be mixed with a carrier wave in an up-conversion process. The sender device can then wirelessly transmit the mixed signals to a receiver device. The receiver device removes the carrier wave from received signals in a down-conversion process to obtain the baseband waveform. The receiver device can then perform demodulation of the baseband waveform to obtain the modulated information.

Multi-mode WCDs, which may conform to the UMTS standard, incorporate different modulation paths for different communication modes, such as GSM and CDMA, because the different communication modes have different considerations. For example, key parameters in a modulator used for baseband waveforms in the GSM communication mode include carrier suppression, receiver band noise at large offsets, image suppression, and group delay matching. On the other hand, key parameters in a modulator for baseband waveforms in the CDMA communication mode include gain control range, maximum transmitter output power, and carrier suppression at minimum transmitter output power.

Attention is drawn to US 2003/078011 A1 which describes integrating a plurality of radio systems in a unified transceiver structure. All components for the necessary communication protocols of a device are determined by selecting the operation ranges of the components and designing a mechanism to adjust the operation parameters of the shared components for conforming to the utilized communications system. Therefore, only one radio frequency (RF) module is required for a communications device having a plurality of communication systems. An end user can advantageously carry a single and compact wireless device for various communications systems.

Further attention is drawn to US 2005/168281 A1 which describes a high-frequency power amplification electronic part which comprises a power amplifier circuit and a bias control circuit, the power amplifier circuit having a plurality of amplifier stages for amplifying an input high-frequency signal, the bias control circuit acting to bias the power amplifier circuit. The power amplifier circuit controls output power in accordance with input power that is varied while a gain of the power amplifier circuit is being fixed by either a bias current or a bias voltage supplied from the bias control circuit. The bias control circuit supplies at least two diode characteristic elements with a predetermined current each in order to generate at least two voltages demonstrating different temperature characteristics, the bias control circuit further using the generated voltages as a basis for generating either a plurality of bias currents or a plurality of bias voltages having a desired temperature-dependent rate of change each, the generated bias currents or bias voltages being fed to each of the plural amplifier stages constituting the power amplifier circuit.

Attention is drawn to US 2003/193923 A1 describing a multiple-mode multiple band transceiver. Some examples include a multiple-channel transmitter including a plurality of selectable transmit-channel components, the plurality of selectable transmit-channel components sharing at least one element coupled to a modulator, the plurality of selectable transmit channel components forming at least first and second transmit channels configured to generate radio-frequency signals using at least a first and a second multiple-access modulation technique, and a first switch configured to enable at least one of the first and second transmit channels to transmit a communication signal using at least one of the first and the second multiple-access modulation techniques. Further attention is drawn to US 2004/0229592 A1 which describes a multiple-mode multiple band transceiver. In some embodiments, the transmission circuit has a a common radio path up to the radio-frequency mixers.

## SUMMARY

In accordance with the present invention a method, a multi-mode wireless communication device (WCD) and a computer-readable medium, as set forth in the independent claims, are provided. Preferred embodiments of the invention are claimed in the dependent claims.

In general, the disclosure is directed toward techniques that allow operation according to two or more different communication modes in a single modulation path of a variable radio frequency (RF) modulator within a multi-mode wireless communication device (WCD). A multi-mode WCD supports operation in two or more different communication modes. The multi-mode WCD may detect a service signal from a base station within a wireless communication system and select a communication mode in which to operate based on the communication mode of the detected service signal. The techniques described herein enable the multi-mode WCD to set parameters, e.g., gain, bandwidth, bias current, bias voltage, and common mode voltage, of variable components within the RF modulator based on the selected communication mode. In this way, the single modulation path of the variable RF modulator may be set to process an audio or video signal from a user of the WCD according to the communication mode in which the multi-mode WCD is operating.

The multi-mode WCD may include a mobile station modem (MSM) that determines a communication mode of a detected service signal and selects an equivalent communication mode in which to operate the multi-mode WCD. For example, service signals may conform to one of a code division multiple access (CDMA) communication mode, a global system for mobile communications (GSM) communication mode, or another communication mode. In addition, the MSM may determine a frequency band of the selected communication mode based on the frequency band in which the detected service signal is operating. For example, service signals may operate within one of a high frequency band, e.g., 1700-2100 MHz, or a low frequency band, e.g., 824-915 MHz of the communication mode.

The MSM determines parameters and output power for the frequency band of the selected communication mode. A digital controller within the variable RF modulator uses the determined parameters from the MSM to set variable components along the single modulation path of the variable RF modulator. In some cases, the digital controller only sets variable components associated with the frequency band of the selected communication mode. The variable RF modulator then processes a user signal and the digital controller selects an output port of the variable RF modulator based on the selected communication mode. The variable RF modulator sends the processed user signal with sufficient gain and output power for the frequency band of the selected communication mode to a transmitter included in the multi-mode WCD via the selected output port. The techniques described herein may reduce the cost of manufacturing RF modulators within multi-mode WCDs by eliminating the need to include separate modulation paths for each communication mode supported by the multi-mode WCDs.

In one embodiment, the disclosure provides a method comprising operating two or more communication modes in a single modulation path of a variable RF modulator included in a multi-mode WCD that supports the two or more communication modes. The method also comprises processing a signal from a user of the WCD according to a selected one of the two or more communication modes by setting parameters of variable components along the single modulation path of the variable RF modulator based on the selected one of the communication modes.

In another embodiment, the disclosure provides a computer-readable medium comprising instructions. The instructions cause the programmable processor to operate two or more communication modes in a single modulation path of a variable RF modulator included in a multi-mode WCD that supports the two or more communication modes. The instructions further cause the programmable processor to process a signal from a user of the WCD according to a selected one of the two or more communication modes by setting parameters of variable components along the single modulation path of the variable RF modulator based on the selected one of the communication modes.

In another embodiment, the disclosure provides a multi-mode WCD that supports two or more communication modes comprising a variable RF modulator that operates the two or more communication modes in a single modulation path of the variable RF modulator. The variable RF modulator processes a signal from a user of the multi-mode WCD according to a selected one of the two or more communication modes by setting parameters of variable components along the single modulation path of the variable RF modulator based on the selected one of the communication modes.

In a further embodiment, the disclosure provides a method comprising selecting a communication mode in which to run a multi-mode WCD based on a detected service signal, determining parameters and output power for a frequency band of the selected communication mode, and setting parameters of variable components along a single modulation path of a variable RF modulator based on the determined parameters. The method also comprises processing a signal from a user of the multi-mode WCD with the variable RF modulator according to the selected communication mode.

In another embodiment, the disclosure provides a computer-readable medium comprising instructions. The instructions cause a programmable processor to select a communication mode in which to run a multi-mode WCD based on a detected service signal, determine parameters and output power for a frequency band of the selected communication mode, and set parameters of variable components along a single modulation path of a variable RF modulator based on the determined parameters. The instructions further cause the programmable processor to process a signal from a user of the multi-mode WCD with the variable RF modulator according to the selected communication.

In another embodiment, the disclosure provides a multi-mode WCD comprising a receiver that detects a service signal, a MSM, and a variable RF modulator. The MSM selects a communication mode in which to run the multi-mode WCD based on the detected service signal, and determines parameters and output power for a frequency band of the selected communication mode. The variable RF modulator includes a digital controller that sets parameters of variable components along a single modulation path of the variable RF modulator based on the determined parameters from the MSM. The variable RF modulator processes a signal from a user of the WCD according to the selected communication.

The techniques described herein may be implemented in hardware, software, firmware, or any combination thereof. If implemented in software, the techniques may be realized in whole or in part by a computer readable medium comprising instructions that, when executed by a processor, performs one or more of the methods described herein.

The details of one or more embodiments are set forth in the accompanying drawings and the description below. Other features, objects, and advantages of the invention will be apparent from the description and drawings, and from the claims.

## BRIEF DESCRIPTION OF DRAWINGS

FIG. 1 is a block diagram illustrating a wireless communication system that includes a multi-mode WCD implementing techniques that allow operation according to two or more different communication modes in a single modulation path of a variable RF modulator within the multi-mode WCD.

FIG. 2 is a block diagram illustrating a mobile station modem and a variable RF modulator from FIG. 1 in greater detail.

FIG. 3 is a flowchart illustrating an exemplary operation of processing a signal according to a communication mode selected for a multi-mode WCD with a single modulation path of a variable RF modulator included in the multi-mode WCD.

FIG. 4 illustrates a variable RF modulator from FIG. 2 in greater detail.

FIG. 5 illustrates an exemplary embodiment of a digital controller from FIG. 4.

FIG. 6 illustrates an exemplary embodiment of an up-converter from FIG. 4.

FIG. 7 illustrates another exemplary embodiment of an up-converter from FIG. 4.

FIG. 8 illustrates an exemplary embodiment of a LO buffer within a LO system that drives a RF mixer.

FIG. 9 illustrates an exemplary embodiment of any of lowband LO buffers or highband LO buffers from FIG. 4.

FIG. 10 illustrates an exemplary embodiment of a harmonic reject filter from FIG. 4.

FIG. 11 illustrates an exemplary embodiment of a RF VGA from FIG. 4.

FIG. 12 illustrates an exemplary embodiment of a driver amplifier from FIG. 4.

FIG. 13 illustrates an exemplary embodiment of a driver amplifier bias circuit that provides a bias input current to the driver amplifier from FIG. 10.

## DETAILED DESCRIPTION

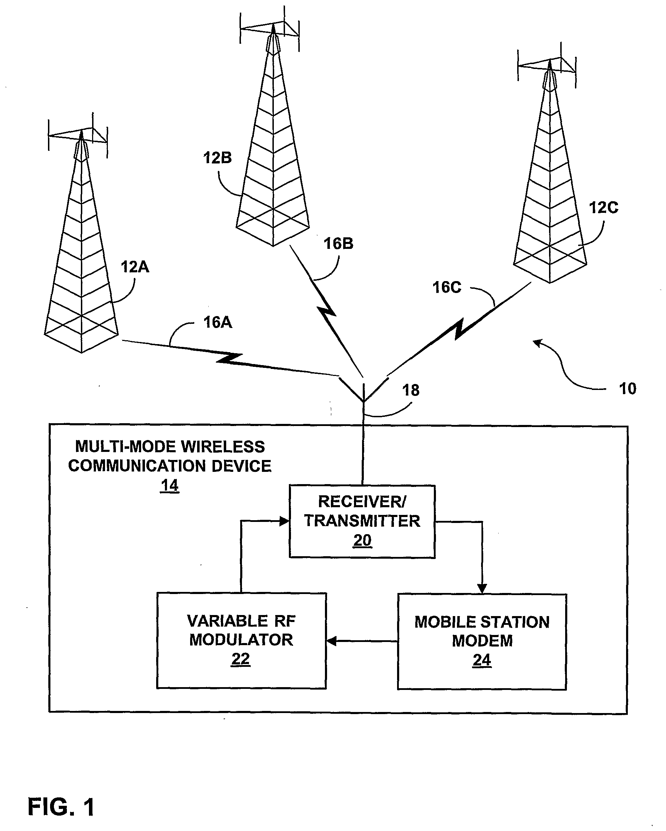

FIG. 1 is a block diagram illustrating a wireless communication system 10 that includes a multi-mode wireless communication device (WCD) 14 implementing techniques that allow operation according to two or more different communication modes in a single modulation path of a variable radio frequency (RF) modulator 22 within multi-mode WCD 14. Multi-mode WCD 14 supports operation in two or more different communication modes, such as the code division multiple access (CDMA) communication mode, the Global System for Mobile Communications (GSM) communication mode, or other communication modes. This may be especially useful when traveling, as different countries may provide wireless communication environments that conform to different wireless communication standards. For example, a majority of the wireless communication environments provided in the United States of America conform to the CDMA family of standards or the wideband CDMA (WCDMA) family of standards. On the other hand, a majority of the wireless communication environments provided in Europe conform to the GSM standard or the edge GSM (eGSM) standard.

System 10 may be designed to support one or more wireless communication technologies such as CDMA, frequency division multiple access (FDMA), or time division multiple access (TDMA). The above wireless communication technologies may be delivered according to any of a variety of radio access technologies. For example, CDMA may be delivered according to the CDMA family of standards, including cdma2000, or the WCDMA family of standards. FDMA and TDMA may be delivered according to the GSM standard or the eGSM standard. The Universal Mobile Telecommunication System (UMTS) standard permits GSM or CDMA operation. Application to UMTS environments will be described herein for purposes of illustration. For example, system 10 may be especially useful for CDMA or GSM communication in a UMTS environment, but should not be considered limited in its application to a wide variety of wireless communication environments.

Wireless communication system 10 includes a plurality of base stations 12A-12C ("base stations 12") that communicate with multi-mode WCD 14. Although only one multi-mode WCD 14 is illustrated, system 10 may include a plurality of multi-mode WCDs and/or single-mode WCDs. Multi-mode WCD 14 may take the form of a mobile radiotelephone, a satellite radiotelephone, a wireless communication card incorporated within a portable computer, a personal digital assistant (PDA) equipped with wireless communication capabilities, or the like. Base stations 12 are generally stationary equipment that wirelessly communicate with multi-mode WCD 14 in order to provide network access to multi-mode WCD 14. For example, base stations 12 may provide an interface between multi-mode WCD 14 and a public switched telephone network (PSTN) such that telephone calls can be routed to and from multi-mode WCD 14. Alternatively or additionally, base stations 12 may be coupled to a packet-based network for transmission of packet-based voice information or packet-based data. Base stations 12 are sometimes referred to as base transceiver systems (BTS).

Multi-mode WCD 14 includes an antenna 18, a receiver/transmitter 20, variable RF modulator 22, and a mobile station modem (MSM) 24. Receiver/transmitter 20 receives wireless signals 16A-16C ("signals 16") from base stations 12 via antenna 18. Multi-mode WCD 14 communicates with one or more base stations 12 at a time. As multi-mode WCD 14 moves through a region, it may terminate communication with one base station 12 and initiate communication with another base station 12 based on signal strength or error rate using a series of soft and hard handoffs.

Multi-mode WCD 14 may search for a service signal from one of base stations 12 on which to operate. For example, receiver/transmitter 20 may initially send a series of CDMA service requests on multiple frequency bands via antenna 18 in an effort to obtain CDMA service from one of base stations 12. Service signals may operate within a high frequency band, e.g., 1900 or 2100 MHz, or a low frequency band, i.e., 850 MHz, of the CDMA communication mode. If a CDMA service signal is not detected, receiver/transmitter 20 may then send a series of GSM service requests on multiple frequency bands via antenna 18 in an effort to obtain GSM service from one of base stations 12. Service signals may operate within a high frequency band, i.e., 1800-1900 MHz, or a low frequency band, e.g., 850-900 MHz, of the GSM communication mode.

Upon receiving a service signal (e.g., one of signals 16) via antenna 18, receiver/transmitter 20 sends the service signal to MSM 24. MSM 24 determines the communication mode of the detected service signal and selects an equivalent communication mode in which to operate multi-mode WCD 14. MSM 24 also determines a frequency band of the selected communication mode based on the frequency band in which the detected service signal is operating. MSM 24 then determines parameters and output power for the frequency band of the communication mode and sends the determined parameters to variable RF modulator 22. The parameters may include one or more of gain, bandwidth, bias current, bias voltage, and common mode voltage. MSM 24 also sends a signal, e.g., an audio or video signal, from a user of WCD 14 to RF modulator 22.

Variable RF modulator 22 implements techniques that allow operation according to two or more different communication modes in a single modulation path of variable RF modulator 22. The techniques enable a digital controller within variable RF modulator 22 to set parameters of variable components along the single modulation path of RF modulator 22 based on the communication mode selected by MSM 24. For purposes of illustration, variable RF modulator 22 is described herein as configuring a CDMA modulation path of variable RF modulator 22 to support the GSM communication mode. In other embodiments, more than two communication modes or different communication modes may be configured to operate in a single modulation path of variable RF modulator 22. The techniques described herein may reduce the cost of manufacturing RF modulators within multi-mode WCDs by eliminating the need to include separate modulation paths for each communication mode supported by the multi-mode WCDs.

The digital controller within variable RF modulator 22 uses the determined parameters from MSM 24 to set variable components along the single modulation path of variable RF modulator 22. In some cases, the digital controller may only set those variable components associated with the frequency band of the selected communication mode. Variable RF modulator 22 may then process the signal from the user of multi-mode WCD 14 with the single modulation path according to the communication mode in which multi-mode WCD 14 is operating. The digital controller included in variable RF modulator 22 selects an output port of variable RF modulator 22 based on the selected communication mode. The variable RF modulator then sends the processed signal with sufficient gain and output power for the frequency band of the selected communication mode from variable RF modulator to receiver/transmitter 20 via the selected output port. Receiver/transmitter 20 then transmits the processed signal.

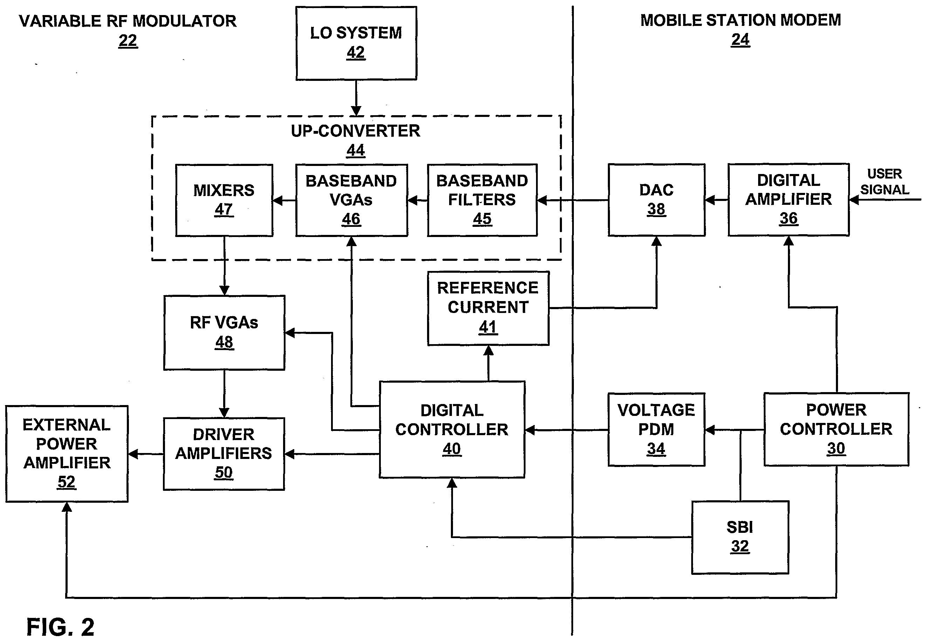

FIG. 2 is a block diagram illustrating mobile station modem 24 and variable RF modulator 22 from FIG. 1 in greater detail. MSM 24 selects a communication mode in which to operate multi-mode WCD 14 based on the communication mode of a detected service signal. For example, MSM 24 may select one of the CDMA communication mode, the GSM communication mode, or another communication mode. In addition, MSM 24 determines a frequency band for the selected communication mode based on the frequency band in which the detected service signal was operating.

In the illustrated embodiment, MSM 24 includes a power controller 30, a serial bus interface (SBI) 32, a voltage pulse density modulator (PDM) 34, a digital amplifier 36, and a digital-to-analog converter (DAC) 38. Power controller 30 determines parameters and output power for the frequency band of the selected communication mode. Power controller 30 then sends the determined output power to an external power amplifier 52 connected to variable RF modulator 22. Power controller 30 sends the determined parameters to digital amplifier 36 as well as to voltage PDM 34 or SBI 32. The one of voltage PDM 34 or SBI 32 then sends output to variable RF modulator 22.

Digital amplifier 36 uses the determined gain in the parameters to amplify or attenuate a digital baseband user signal, e.g., an audio or video signal, received from a user of multi-mode WCD 14. The digital baseband user signal may comprise baseband in-phase differential, i.e., plus and minus, signals $(I, \bar{I})$, and baseband quadrature differential signals $(Q, \bar{Q})$ that are shifted ninety-degrees from the in-phase differential signals. DAC 38 then converts the digital baseband signal to an analog baseband signal. DAC 38 sends the analog baseband signal to variable RF modulator 22.

Variable RF modulator 22 includes digital controller 40, reference current 41, a local oscillator (LO) system 42, an up-converter 44, RF variable gain amplifiers (VGAs) 48, and driver amplifiers 50. Up-converter 44 includes baseband filters 45, baseband VGAs 46, and RF mixers 47. One of each of RF mixers 47, RF VGAs 48, and driver amplifiers 50 maybe associated with a high frequency band, e.g., 1700-2100 MHz, of the selected communication mode. Another one of each of RF mixers 47, RF VGAs 48, and driver amplifiers 50 may be associated with a low frequency band, e.g., 824-915 MHz, of the selected communication mode. In other embodiments, variable components associated with more or fewer frequency bands, or different frequency bands may be included in variable RF modulator 22

Digital controller 40 receives the output of one of voltage PDM 34 or the output of SBI 32 for the determined parameters. Digital controller 40 may include look-up tables or another means for generating gain control signals for variable components within variable RF modulator 22 based on the determined parameters. In the illustrated embodiment, the variable components include baseband filters 45, baseband VGAs 46, RF VGAs 48, and driver amplifiers 50. Digital controller 40 uses the determined parameters from MSM 24 to set parameters, such as gain, bandwidth, bias current, bias voltage, and common mode voltage, of each of the variable components along the single modulation path of variable RF modulator 22 to process the analog baseband signal according to the selected communication mode. In some cases, digital controller 40 only sets parameters of the one of RF VGAs 48 and the one of driver amplifiers 50 associated with the frequency band of the selected communication mode.

Digital controller 40 sets reference current 41 (Iref) based on a desired parameter setting for baseband filters 45 within up-converter 44. Reference current 41, in turn, feeds into DAC 38 within MSM 24 and sets the parameters of baseband filters 45 via DAC 38. Digital controller 40 directly sets parameters of baseband VGAs 46, one of RF VGAs 48 associated with the frequency band of the selected communication mode, and one of driver amplifiers 50 associated with the frequency band of the selected communication mode based on desired parameter setting for each of variable components 46, 48, and 50.

The gain control distribution for multi-mode WCD 14 will be described herein with reference to FIG. 2. In the case where the CDMA communication mode is the selected communication mode, a total of 118 dB of gain control is possible. The 118 dB of gain control includes an optional 12 dB of gain control for external power amplifier 52. Variable RF modulator 22 may provide 94 dB of gain control. For example, the gain determined by power controller 30 included in MSM 24 may provide up to 12 dB of gain control to digital amplifier 36. In addition, digital controller 40 may provide up to 20dB of gain control to reference current 41 and, in turn, baseband filters 45. Furthermore, digital controller 40 may also provide up to 18 dB of gain control to baseband VGAs 46, up to 24 dB of gain control to RF VGAs 48, and up to 32 dB of gain control to driver amplifiers 50. In the case where the GSM communication mode is the selected communication mode, a similar gain control distribution may be determined.

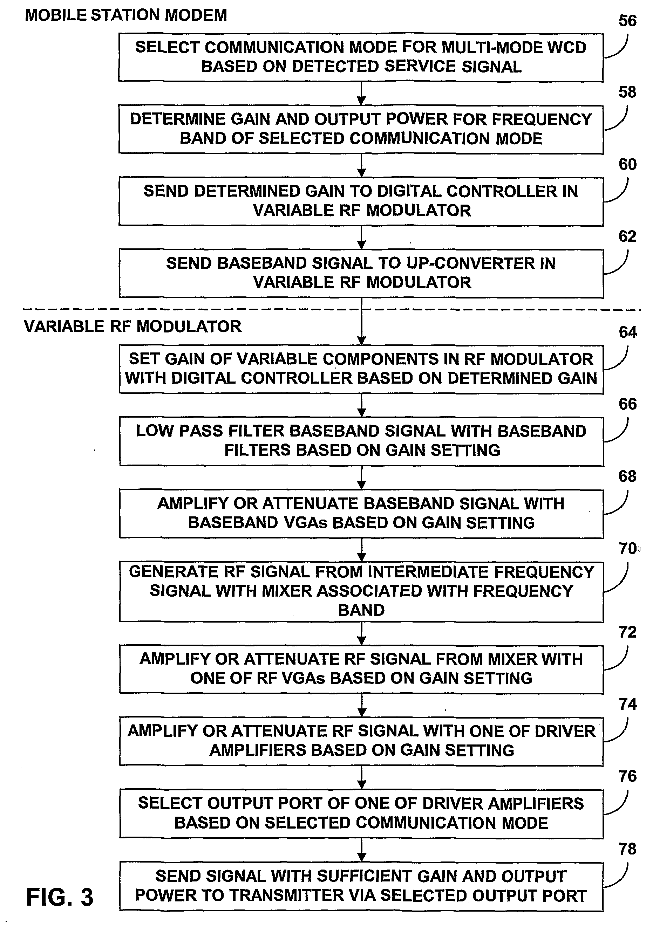

FIG. 3 is a flowchart illustrating an exemplary operation of processing a signal according to a communication mode selected for a multi-mode WCD with a single modulation path of a variable RF modulator included in the multi-mode WCD. The operation will be described herein in reference to MSM 24 and variable RF modulator 22 within multi-mode WCD 14 as illustrated in FIG. 2. MSM 24 detects a service signal from a base station, such as one of base stations 12 from FIG. 1, and selects a communication mode in which to operate multi-mode WCD 14 based on the communication mode of the detected service signal (56).

For example, MSM 24 may detect a service signal that conforms to the CDMA communication mode, the GSM communication mode, or another communication mode. In addition, MSM 24 may determine a frequency band of the selected communication mode based on the frequency band in which the detected service signal is operating. For example, the detected service signal may operate within one of a high frequency band, e.g., 1700-2100 MHz, or a low frequency band, e.g., 824-915 MHz, of the communication mode. As an example, the high frequency band of the CDMA mode is approximately 1900 or 2100 MHz and the low frequency band of the CDMA mode is approximately 850 MHz. The high frequency band of the GSM mode is between approximately 1800-1900 MHz and the low frequency band of the GSM mode is between approximately 850-900 MHz. Of course, the same techniques described herein could also work with other communication modes that operate in other frequency bands.

Power controller 30 within MSM 24 determines parameters, such as gain, bandwidth, bias current, bias voltage, and common mode voltage, and output power necessary to transmit a signal in the frequency band of the selected communication mode (58). Power controller 30 then sends the determined parameters to digital amplifier 36 and one of voltage PDM 34 or SBI 32. Power controller 30 sends the determined output power to an external power amplifier 52 connected to variable RF modulator 22. The one of SBI 32 or voltage PDM 34 then sends the determined parameters to digital controller 40 within variable RF modulator 22 (60).

MSM 24 may also receive a digital baseband signal from a user of multi-mode WCD 14 for transmission. The digital baseband user signal may comprise baseband in-phase differential signals and baseband quadrature differential signals. Digital amplifier 36 amplifies or attenuates the digital baseband signal based on gain included in the determined parameters from power controller 30. DAC 38 then converts the digital baseband signal to an analog baseband signal and sends the analog baseband signal to up-converter 44 within variable RF modulator 22 (62).

Digital controller 40 receives the output of voltage PDM 34 and the output of SBI 32 for the determined parameters. Digital controller 40 may include look-up tables or another means for generating gain control signals for variable components within variable RF modulator 22 based on the determined parameters. In the illustrated embodiment, the variable components include baseband filters 45, baseband VGAs 46, RF VGAs 48, and driver amplifiers 50. Digital controller 40 set parameters of each of the variable components along the single modulation path of variable RF modulator 22 based on the determined parameters from MSM 24 to process the analog baseband signal according to the selected communication mode (64). In some cases, digital controller 40 only sets parameters of the one of RF VGAs 48 and the one of driver amplifiers 50 associated with the frequency band of the selected communication mode.

Digital controller 40 sets reference current 41 (Iref) based on a desired parameter setting for baseband filters 45 within up-converter 44. Reference current 41, in turn, feeds into DAC 38 within MSM 24 and sets the parameters of baseband filters 45 via DAC 38. Digital controller 40 directly sets parameters of baseband VGAs 46, the one of RF VGAs 48 associated with the frequency band of the selected communication mode, and the one of driver amplifiers 50 associated with the frequency band of the selected communication mode based on desired parameter settings for each of variable components 46, 48, and 50.

Baseband filters 45 lowpass filter the analog baseband signal received from DAC 38 based on the parameters set indirectly by digital controller 40 (66). Baseband VGAs 46 then amplify or attenuate the analog baseband signal based on the gain set by digital controller 40 (68) to generate an analog intermediate frequency signal. The one of RF mixers 47 associated with the frequency band of the selected communication band, e.g., the high frequency band or the low frequency band, receives the analog intermediate frequency signal from baseband VGAs 46 as well as RF signals from LO system 42. LO system 42 includes a LO buffer that drives the one of RF mixers 47 associated with the frequency band of the selected communication mode by providing RF in-phase and quadrature differential signals only to the one of RF mixers 47. The one of RF mixers 47 associated with the frequency band of the selected communication mode then generates a RF signal from the analog intermediate frequency signal (70).

The one of RF VGAs 48 amplifies or attenuates the RF signal from the one of RF mixers 47 based on the gain set by digital controller 40 (72). The one of driver amplifiers 50 amplifies or attenuates the RF signal from the one of RF VGAs 48 based on the gain set by digital controller 40 (74). Digital controller 40 then selects an output port of the one of driver amplifiers 50 based on the selected communication mode (76). The one of driver amplifiers 50 then sends the RF signal with sufficient gain and output power for the frequency band of the selected communication mode from variable RF modulator 22 to receiver/transmitter 20 via the selected output port (78). In the illustrated embodiment of FIG. 2, the one of driver amplifiers 50 first sends the RF signal to power amplifier 52, which amplifies or attenuates the RF signal based on the determined output power from power controller 30, and power amplifier 52 then sends the RF signal to receiver/transmitter 20.

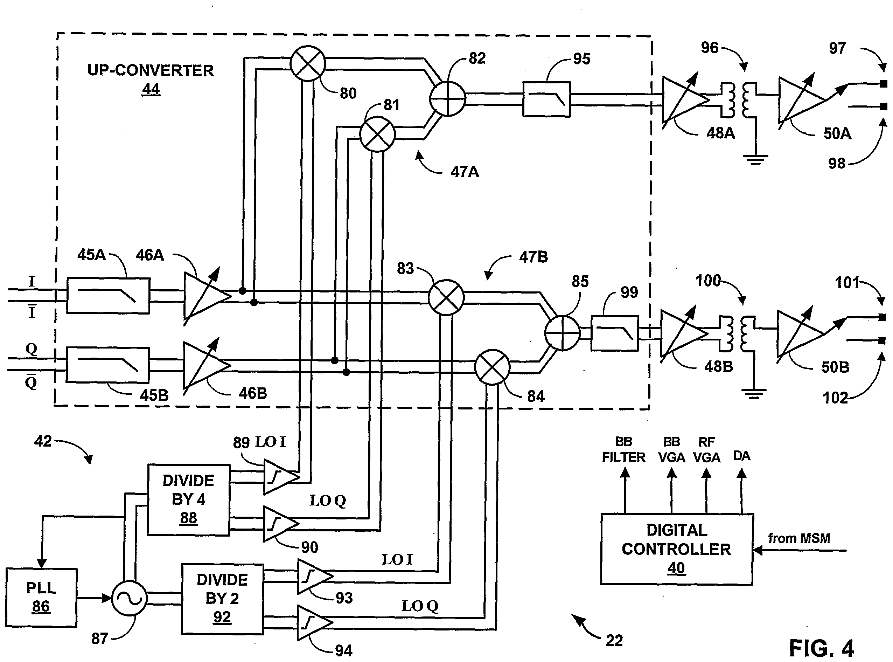

FIG. 4 illustrates variable RF modulator 22 from FIG. 2 in greater detail. Variable RF modulator 22 receives a baseband analog user signal from MSM 24. In the embodiment illustrated in FIG. 4, the baseband analog user signal comprises baseband in-phase differential signals $(I, \overline{I})$ and baseband quadrature differential signals $(Q, \overline{Q})$ that are shifted ninety-degrees from the in-phase differential signals.

As described above, digital controller 40 receives the determined parameters from MSM 24. Digital controller 40 may include look-up tables or another means for generating gain control signals for variable components within variable RF modulator 22 based on the determined parameters. In FIG. 4, the variable components include baseband filters 45, baseband VGAs 46, RF VGAs 48, and driver amplifiers 50. Digital controller 40 uses the determined parameters from MSM 24 to set parameters of each of the variable components along the single modulation path of variable RF modulator 22 to process the analog baseband signal according to the selected communication mode. In some cases, digital controller 40 only sets parameters of the one of RF VGAs 48 and the one of driver amplifiers 50 associated with the frequency band of the selected communication mode.

In the example of FIG. 4, all aspects of variable RF modulator 22, including mode switching, power down, and gain control are under digital control via SBI 32 of MSM 24. Gain control within multi-mode WCD 14 operating in the CDMA communication mode is in discrete steps. For example, the gain control in baseband filters 45 via reference current 41, baseband VGAs 46, RF VGAs 48, and driver amplifiers 50 is composed of 256 discrete steps. Digital controller 40 generates the internal gain control signals for each of the variable components within variable RF modulator 22 with an 8 bit analog-to-digital converter that samples the analog voltage received from voltage PDM 34 or by receiving the pulse density modulated 1 bit signal directly from voltage PDM 34 and converting the 1 bit signal to a 8 bit signal by passing the PDM voltage through a digital filter. The output of the analog-to-digital converter or the digital filter is applied to look-up tables that provide linear in db gain control characteristic for each of the variable components along the single modulation path of variable RF modulator 22. Gain control and filter bandwidth within multi-mode WCD 14 operating in the GSM communication mode is programmed prior to the burst for each slot. Transitions of the RF signal indicate the beginning end of a slot. The transitions also load the different gain and filter bandwidth settings for each slot.

Up-converter 44 includes an in-phase baseband filter 45A, a quadrature baseband filter 45B, an in-phase baseband VGA 46A, a quadrature baseband VGA 46B, lowband RF mixer 47A, and highband RF mixer 47B. In the illustrated embodiment of FIG. 4, baseband filters 45A, 45B comprise low pass filters. An input buffer (not shown) receives the baseband I and Q differential signals from MSM 24 and applies the baseband I differential signals to baseband filter 45A and applies the baseband Q differential signals to baseband filter 45B. Baseband filters 45A and 45B may low pass filter the respective baseband differential signals based on the parameters set by the gain control signal for the baseband filters from digital controller 40.

In-phase baseband filter 45A then applies the filtered baseband I differential signals to in-phase baseband VGA 46A, and quadrature baseband filter 45B applies the filtered baseband Q differential signals to quadrature baseband VGA 46B. Baseband VGAs 46A and 46B either amplify or attenuate the respective filtered baseband differential signals based on the gain set by the gain control signal for the baseband VGAs from digital controller 40. In this way, the baseband VGAs 46A and 46B generate intermediate frequency differential signals from the filtered baseband differential signals.

In-phase baseband VGA 46A outputs the intermediate frequency I differential signals to the one of lowband RF mixer 47A and high band RF mixer 47B associated with the frequency band of the selected communication mode. Quadrature baseband VGA 46B also outputs the intermediate frequency Q differential signals to the one of lowband RF mixer 47A and highband RF mixer 47B associated with the frequency band of the selected communication mode. For example, if MSM 24 determines that the frequency band of the selected communication mode, e.g., CDMA or GSM, comprises the low frequency band (e.g., 824-915 MHz), then baseband VGAs 46A and 46B will output the respective intermediate frequency differential signals to lowband RF mixer 47A. In addition, if MSM 24 determines that the frequency band of the selected communication mode, e.g., CDMA or GSM, comprises the high frequency band (e.g., 1700-2100 MHz), then baseband VGAs 46A and 46B will output the respective intermediate frequency differential signals to highband RF mixer 47B.

LO system 42 includes a phase-locked loop (PLL) 86 and an oscillator 87 that outputs a differential RF LO signal with a frequency between approximately 3.2 GHz and 4 GHz. LO system 42 also include a divide by 4 module 88 that generates a low frequency band signal from the output of oscillator 87, and a divide by 2 module 92 that generates a high frequency band signal from the output of oscillator 87. For example, divide by 4 module 88 generates a differential RF LO signal with a frequency between approximately 800 MHz and 1000 MHz. Divide by 2 module 92 generates a differential RF LO signal with a frequency between approximately 1600 MHz and 2000 MHz. A LO buffer (not shown) within LO system 42, drives the one of RF mixers 47A, 47B associated with the frequency band of the selected communication mode by buffering the differential RF LO signal from oscillator 87 to either divide by 4 module 88 for the low frequency band or divide by 2 module 92 for the high frequency band.

The low frequency band differential signals output from divide by 4 module 88 are buffered by lowband in-phase LO buffer 89 and lowband quadrature LO buffer 90. The lowband buffers 89 and 90 send their respective RF signal outputs to lowband RF mixer 47A in up-converter 44. The high frequency band differential signals output from divide by 2 module 92 are buffered by highband in-phase LO buffer 93 and highband quadrature LO buffer 94. The highband buffers 93 and 94 send their respective RF signal outputs to highband RF mixer 47B in up-converter 44.

Lowband RF mixer 47A includes an in-phase multiplier 80, a quadrature multiplier 81, and an adder 82. In the case where the frequency band of the selected communication mode is the low frequency band, in-phase multiplier 80 receives the intermediate frequency I differential signals from in-phase baseband VGA 46A and the RF I differential signals from lowband in-phase LO buffer 89. Quadrature multiplier 81 receives the intermediate frequency Q differential signals from quadrature baseband VGA 46B and the RF Q differential signals from lowband quadrature LO buffer 90. Multipliers 80 and 81 generate RF differential signals that are summed by adder 82 and sent to a harmonic reject filter 95.

Harmonic reject filter 95 rejects third and higher order harmonics of the RF differential signals from lowband RF mixer 47A. If harmonic reject filter 95 were not included in up-converter 44, the harmonics of the RF differential signals would mix with the fundamentals of the RF differential signals in lowband driver amplifier 50A due to third order non-linearity in lowband driver amplifier 50A. The third order non-linearity degrades the adjacent channel leakage ratio of transmitter 20. The better the adjacent channel leakage ratio of transmitter 20, the less power interference transmitter 20 generates in the adjacent channel. Harmonic reject filter 95 then sends the filtered RF differential signals to lowband RF VGA 48A.

Lowband RF VGA 48A either amplifies or attenuates the RF differential signals output from lowband RF mixer 47A based on the gain set by the gain control signal for the one of the RF VGAs associated with the frequency band of the selected communication mode from digital controller 40. Lowband RF VGA 48A then generates a single RF signal by passing the RF differential signals through a transformer 96. Lowband driver amplifier 50A either amplifies or attenuates the RF signal from lowband RF VGA 48A based on the gain set by the gain control signal for the one of the driver amplifiers associated with the frequency band of the selected communication mode from digital controller 40.

Lowband driver amplifier 50A includes a CDMA communication mode output port 97 and a GSM communication mode output port 98. Digital controller 40 selects the one of output ports 97 and 98 of lowband driver amplifier 50A based on the communication mode selected by MSM 24 in which to operate multi-mode WCD 14. In the case where the selected communication mode comprises the CDMA communication mode, digital controller 40 selects CDMA output port 97 of lowband driver amplifier 50A, which provides sufficient gain and output power for the low frequency band, e.g., 850 MHz, of the selected CDMA communication mode. In the case where the selected communication mode comprises the GSM communication mode, digital controller 40 selects GSM output port 98 of lowband driver amplifier 50A, which provides sufficient gain and output power for the low frequency band, e.g., 850-900 MHz, of the selected GSM communication mode.

Highband RF mixer 47B includes an in-phase multiplier 83, a quadrature multiplier 84, and an adder 85. In the case where the frequency band of the selected communication mode is the high frequency band, in-phase multiplier 83 receives the intermediate frequency I differential signals from in-phase baseband VGA 46A and the RF I differential signals from highband in-phase LO buffer 93. Quadrature multiplier 84 receives the intermediate frequency Q differential signals from quadrature baseband VGA 46B and the RF Q differential signals from highband quadrature LO buffer 94. Multipliers 83 and 84 generate RF differential signals that are summed by adder 85 and sent to a harmonic reject filter 99.

Harmonic reject filter 99 rejects third and higher order harmonics of the RF differential signals from highband RF mixer 47B. If harmonic reject filter 99 were not included in up-converter 44, the harmonics of the RF differential signals would mix with the fundamentals of the RF differential signals in highband driver amplifier 50B due to third order non-linearity in lowband driver amplifier 50B. The third order non-linearity degrades the adjacent channel leakage ratio of transmitter 20. The better the adjacent channel leakage ratio of transmitter 20, the less power interference transmitter 20 generates in the adjacent channel. Harmonic reject filter 99 then sends the filtered RF differential signals to highband RF VGA 48B.

Highband RF VGA 48B either amplifies or attenuates the RF differential signals output from highband RF mixer 47B based on the gain set by the gain control signal for the one of the RF VGAs associated with the frequency band of the selected communication mode from digital controller 40. Highband RF VGA 48B then generates a single RF signal by passing the RF differential signals through a transformer 100. Highband driver amplifier 50B either amplifies or attenuates the RF signal from highband RF VGA 48B based on the gain set by the gain control signal for the one of the driver amplifiers associated with the frequency band of the selected communication mode from digital controller 40.

Highband driver amplifier 50B includes a CDMA communication mode output port 101 and a GSM communication mode output port 102. Digital controller 40 selects the one of output ports 101 and 102 of highband driver amplifier 50B based on the communication mode selected by MSM 24 in which to operate multi-mode WCD 14. In the case where the selected communication mode comprises the CDMA communication mode, digital controller 40 selects CDMA output port 101 of highband driver amplifier 50B, which provides sufficient gain and output power for the high frequency band, e.g., 1900 or 2100 MHz, of the selected CDMA communication mode. In the case where the selected communication mode comprises the GSM communication mode, digital controller 40 selects GSM output port 102 of highband driver amplifier 50B, which provides sufficient gain and output power for the high frequency band, e.g., 1800-1900 MHz, of the selected GSM communication mode.

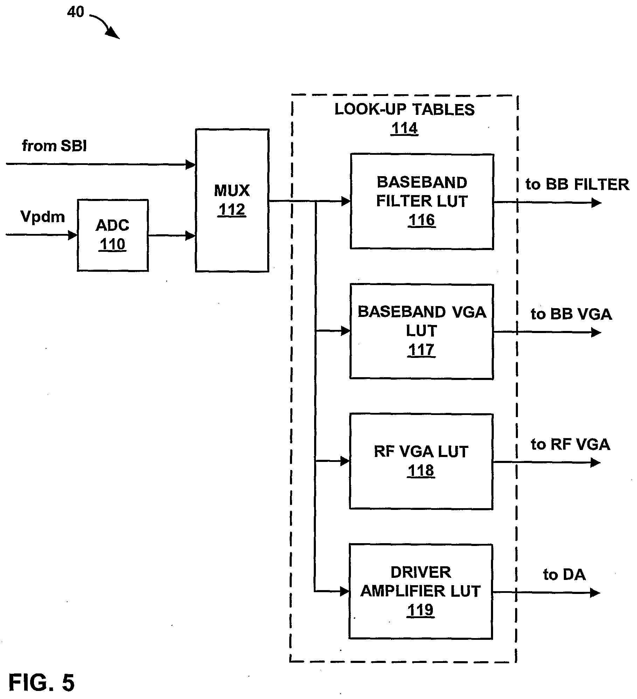

FIG. 5 illustrates an exemplary embodiment of digital controller 40 from FIG. 4. Digital controller 40 sets parameters of each of the variable components along the single modulation path of variable RF modulator 22 based on the determined parameters from MSM 24 to process the analog baseband signal according to the selected communication mode. The parameters may include gain, bandwidth, bias current, bias voltage, and common mode voltage.

Digital controller 40 includes an analog-to-digital converter (ADC) 110, a multiplexer (mux) 112, and look-up tables 114. ADC 110 receives an analog voltage signal from voltage PDM 34 of MSM 24 and converts the analog voltage signal into a digital voltage signal. Mux 112 receives the digital output of voltage PDM 34 and output from SBI 32 of MSM 24 for the determined parameters for the frequency band of the selected communication mode. Mux 112 applies one of the digital output of voltage PDM 34 or the output from SBI 32 to look-up tables 114 for the determined parameters. Look-up tables 114 may generate gain control signals for variable components within variable RF modulator 22 based on the determined parameters.

In the illustrated embodiment, look-up tables 114 include a baseband filter look-up table (LUT) 116, a baseband VGA LUT 117, a RF VGA LUT 118, and a driver amplifier LUT 119. Each of LUTs 116-119 generates a gain control signal for the respective variable component along the single modulation path of variable RF modulator 22. For example, the gain control signals between LUTs 116-119 and the respective variable components may comprise 8-bit control words, although this could be changed in other implementations. Each of the LUTs may generate the gain control signal for the respective variable component based on a gain control range ($G_{range}$) and a gain rate control ($P_{max}$) for the variable component.

As an example, each of LUTs 116-119 may generate the gain control signal according to the following function:

$$Gi(pdm) := min\left[255, round\left[10^{\dfrac{Grange \cdot \dfrac{\left(\dfrac{pdm}{Pmax}-1\right)}{20}} {}} \cdot 256\right]\right] \qquad (1)$$

where $G_{range}$ and $P_{max}$ are set by the look-up table for the respective variable component within variable RF modulator 22. In equation (1), $G_{range}$ is the value listed for the required gain control range in each variable component, and $P_{max}$ controls how fast each variable component reaches its maximum gain. For example, in the case of the CDMA communication mode, $G_{range}$ is 20 dB and $P_{max}$ is 230 mW for baseband filters 45 via reference current 41, $G_{range}$ is 18 dB and $P_{max}$ is 240.9 mW for baseband VGAs 46, $G_{range}$ is 24 dB and $P_{max}$ is 248.2 mW for RF VGAs 48, and $G_{range}$ is 32 dB and $P_{max}$ is 248.2 mW for driver amplifiers 50.

Baseband filter LUT 116 sets reference current 41 (Iref) based on the gain control signal for baseband filters 45 operating according to the selected communication mode. Reference current 41, in turn, feeds into DAC 38 within MSM 24 and sets the parameters of baseband filters 45 via DAC 38. Baseband VGA LUT 117 directly sets parameters of baseband VGAs 46 based on the gain control signal for baseband VGAs operating according to the selected communication mode. RF VGA LUT 118 directly sets parameters of the one of RF VGAs 48 associated with the frequency band of the selected communication mode based on the gain control signal for the one of RF VGAs 48 operating according to the selected communication mode. Finally, driver amplifier LUT 119 directly sets parameters of the one of driver amplifiers 50 associated with the frequency band of the selected communication mode based on the gain control signal for the one of driver amplifiers 50 operating according to the selected communication mode.

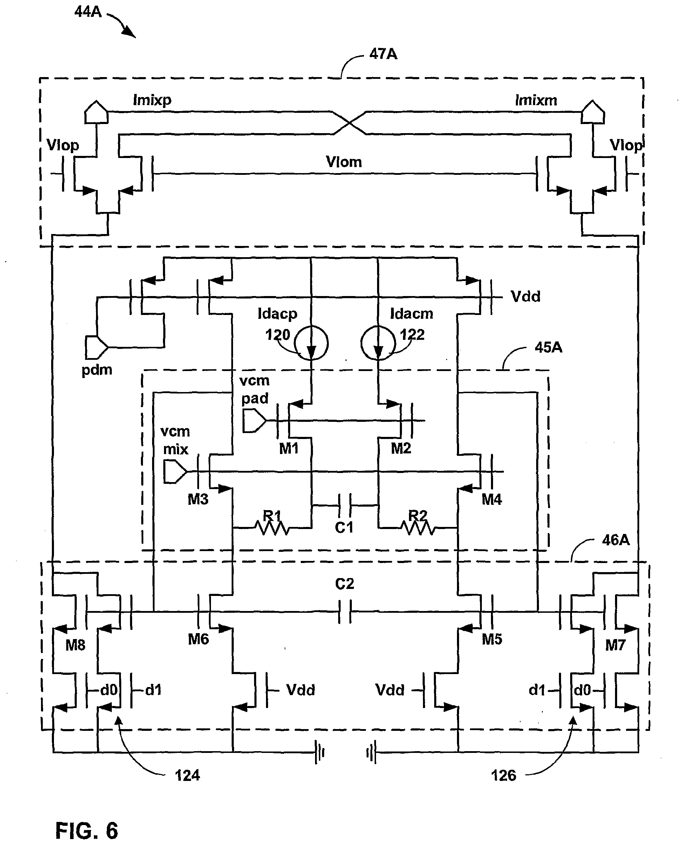

FIG. 6 illustrates an exemplary embodiment of an up-converter 44A substantially similar to up-converter 44 from FIG. 4. For purposes of illustration, FIG. 6 shows only in-phase baseband filter 45A, in-phase baseband VGA 46A, and lowband RF mixer 47A. Typically, up-converter 44A would also include quadrature baseband filter 45B, quadrature baseband VGA 46B, and highband RF mixer 47B. It may be assumed that quadrature baseband filter 45B is substantially similar to in-phase baseband filter 45A, quadrature baseband VGA 46B is substantially similar to in-phase baseband VGA 46A, and highband RF mixer 47B is substantially similar to lowband RF mixer 47A.

Up-converter 44A receives in-phase differential (i.e., plus and minus) input current, Idacp 120 and Idacm 122, from DAC 38 of MSM 24. Idacp 120 and Idacm 122 are input into in-phase baseband filter 45A. In-phase baseband filter 45A includes transistors M1 and M2, which respectively buffer Idacp 120 and Idacm 122 to capacitor C1 and respective transistors M3 and M4 included in in-phase baseband filter 45A. Transistors M3 and M4 low pass filter the in-phase differential input current, Idacp 120 and Idacm 122, based on the parameters set by the gain control signal for the baseband filters from digital controller 40. Typically, in-phase baseband filter 45A has 8-bit gain control via reference current 41 from a look-up table for the baseband filters 45, e.g., baseband filter LUT 116 from FIG. 5. Transistors M3 and M4 then send the low pass versions of Idacp 120 and Idacm 122 to capacitor C2 and respective transistors M6 and M5 included in in-phase baseband VGA 46A.

In-phase baseband filter 45A provides a second order lowpass transfer function, given by the following equation:

$$iout(s,pdm) := Idac \cdot 5.8 \cdot 10^{Gbb \cdot \left(\dfrac{pdm}{pmax}-1\right)} \cdot \dfrac{1}{\left(\dfrac{s}{\omega o}\right)^2 + \dfrac{s}{\omega o \cdot Q} + 1} \qquad (2)$$

The bandwidth of in-phase baseband filter 45A may be controlled by changing the values of capacitors C1 and C2 and by changing the current (pdm) via SBI 32 or voltage PDM 34 of MSM 24. The bandwidth of in-phase baseband filter 45A may be varied between 1 MHz and 12 MHz under the nominal case. The bandwidth of in-phase baseband filter 45A is varied by setting the capacitor C1 and capacitor C2 values for the selected communication mode, e.g., CDMA or GSM. The parameters of in-phase baseband filter 45A may be chosen to give a second order transfer function.

Transistors M3 and M6 comprise a feedback circuit for the baseband in-phase plus signal. The input impedance looking into the drain of transistor M6 is approximately given by $\dfrac{s \cdot C2}{gm3 \cdot gm6}$. In other words, the feedback circuit of transistors M3 and M6 realize an inductive input impedance with inductance $L = \dfrac{C2}{gm3 \cdot gm6}$. The input current flowing in transistor M6 is given by the following: $\dfrac{Iin}{\left(1 + R \cdot s \cdot C1 + s^2 \cdot \dfrac{C2}{gm3 \cdot gm6} \cdot C1\right)}$. From this equation the Q is given by

$$Q := \frac{1}{R \cdot \sqrt{gm3 \cdot gm6}} \cdot \sqrt{\frac{C2}{C1}}$$

and the cutoff frequency is given by $\omega o := \sqrt{\dfrac{gm3 \cdot gm6}{C1 \cdot C2}}$. Similarly, transistors M4 and M5 comprise a feedback circuit for the baseband in-phase minus signal.

Transistors M6 and M8 comprise a variable gain current mirror such that transistor M8 amplifies or attenuates the baseband in-phase plus signal from transistor M6 to generate an intermediate frequency in-phase plus signal based on the gain set by the gain control signal for the baseband VGAs from digital controller 40. The intermediate frequency in-phase plus signal is a scaled replica of the baseband in-phase plus signal. Transistor M8 scales the in-phase plus signal based on set of switches 124, which are controlled by digital controller 40. In addition, transistors M5 and M7 comprise a variable gain current mirror such that transistor M7 amplifies or attenuates the baseband in-phase minus signal from transistor M5 to generate an intermediate frequency in-phase minus signal based on the gain set by the gain control signal for the baseband VGAs from digital controller 40. The intermediate frequency in-phase plus signal is a scaled replica of the baseband in-phase plus signal. Transistor M7 scales the in-phase plus signal based on set of switches 126, which are controlled by digital controller 40.

In the illustrated example, set of switches 124 and set of switches 126 each include only two switches, d0 and d1, for each of the respective in-phase plus and minus signals. Typically, in-phase baseband VGA 46A has 8-bit gain control from a look-up table for the baseband VGAs, e.g., baseband VGA LUT 117 from FIG. 5. Therefore, set of switches 124 and set of switches 126 within in-phase baseband VGA 46A may each include up to eight switches, d0-d7, for the respective in-phase differential signals.

For purposes of illustration, the frequency band of the selected communication mode will be described herein as the low frequency band. In other embodiments, the frequency band of the selected communication mode may be the high frequency band. The intermediate frequency in-phase differential signals from transistors M8 and M7 of in-phase baseband VGA 46A are applied directly to lowband RF mixer 47A. In addition, lowband RF mixer 47A receives the RF in-phase differential signals, Vlop and Vlom, from lowband in-phase LO buffer 89 of LO system 42. Although not illustrated in FIG. 6, lowband RF mixer 47A also receives the intermediate frequency quadrature differential signals from quadrature baseband VGA 46B and the RF quadrature differential signals from lowband quadrature LO buffer 90 of LO system 42.

Lowband RF mixer 47A mixes the intermediate frequency differential signals from VGAs 46 with the RF differential signals from lowband LO buffers 89, 90 to generate RF differential signals. The RF differential signals, Imixp and Imixm, output from lowband RF mixer 47A are applied to lowband RF VGA 48A.

In the GSM communication mode, the differential input current, Idacp 120 and Idacm 122, input to up-converter 44A does not vary with the gain control setting from digital controller 40. In the GSM communication mode the gain control setting is fixed. The values of the programmable capacitors C1 and C2 are set to a decimal value of 9 and the value of the natural current is set to a decimal value of 64 for the GSM communication mode.

In the CDMA communication mode, the differential input current, Idacp 120 and Idacm 122, input to up-converter 44A is reduced by reducing reference current 41, which is a function of the gain control signal for baseband filters 45. As the differential input current is reduced, gm2 is reduced; this results in the bandwidth of in-phase baseband filter 45A being reduced. To compensate, the gm1 value is increased to keep the product gm1*gm2 constant by increasing the current through M3 and M4. The values of the programmable capacitors C1 and C2 are set to a decimal value of 0 for the CDMA communication mode.

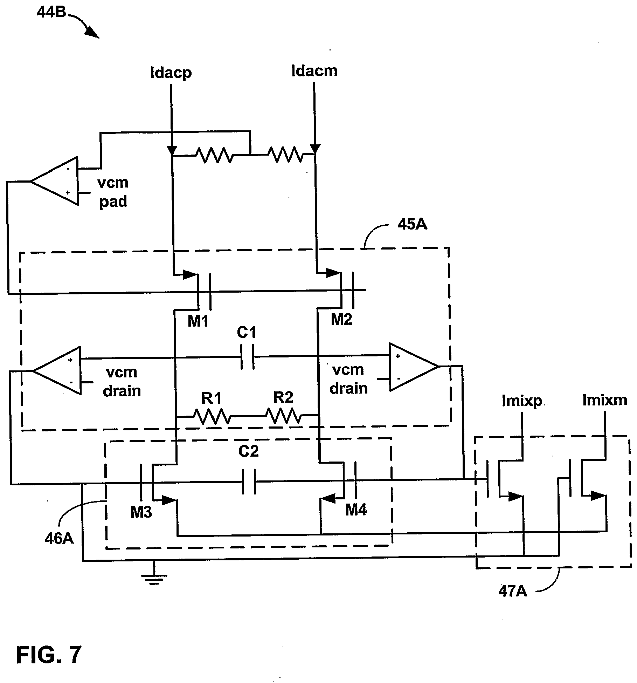

FIG. 7 illustrates another exemplary embodiment of an up-converter 44B substantially similar to up-converter 44 from FIG. 4. For purposes of illustration, FIG. 7 shows only in-phase baseband filter 45A, in-phase baseband VGA 46A, and lowband RF mixer 47A. Typically, up-converter 44B would also include quadrature baseband filter 45B, quadrature baseband VGA 46B, and highband RF mixer 47B. It may be assumed that quadrature baseband filter 45B is substantially similar to in-phase baseband filter 45A, quadrature baseband VGA 46B is substantially similar to in-phase baseband VGA 46A, and highband RF mixer 47B is substantially similar to lowband RF mixer 47A.

Up-converter 44B receives in-phase differential (i.e., plus and minus) input current, Idacp and Idacm, from DAC 38 of MSM 24. Idacp and Idacm are input into in-phase baseband filter 45A. In-phase baseband filter 45A includes transistors M1 and M2, which respectively buffer Idacp and Idacm to capacitor C1. Transistors M1 and M2 low pass filter the in-phase differential input current, Idacp and Idacm, based on the parameters set by the gain control signal for the baseband filters 45 from digital controller 40. Typically, in-phase baseband filter 45A has 8-bit gain control via reference current 41 from a look-up table for the baseband filters 45, e.g., baseband filter LUT 116 from FIG. 5. Transistors M1 and M2 then send the low pass versions of Idacp and Idacm to capacitor C2 and respective transistors M3 and M4 included in in-phase baseband VGA 46A.

In-phase baseband filter 45A provides a second order lowpass transfer function, given by the following equation:

$$H1(s) := \frac{M(pdm)}{\frac{s^2 \cdot C1 \cdot C2}{a21 \cdot a12} + \frac{a11}{a21 \cdot a12} \cdot C2 \cdot s + 1} \qquad (3)$$

The bandwidth of in-phase baseband filter 45A may be controlled by changing the values of capacitors C1 and C2. The bandwidth of in-phase baseband filter 45A may be varied between 1 MHz and 5 MHz under the nominal case. The bandwidth of in-phase baseband filter 45A is varied by setting the capacitor C1 and capacitor C2 values for the selected communication mode, e.g., CDMA or GSM. The parameters of in-phase baseband filter 45A may be chosen to give a second order transfer function.

Transistor M3 amplifies or attenuates the baseband in-phase plus signal from transistor M1 to generate an intermediate frequency in-phase plus signal based on the gain set by the gain control signal for the baseband VGAs from digital controller 40. In addition, transistor M4 amplifies or attenuates the baseband in-phase minus signal from transistor M2 to generate an intermediate frequency in-phase minus signal based on the gain set by the gain control signal for the baseband VGAs from digital controller 40.

For purposes of illustration, the frequency band of the selected communication mode will be described herein as the low frequency band. In other embodiments, the frequency band of the selected communication mode may be the high frequency band. The intermediate frequency in-phase differential signals from transistors M3 and M4 of in-phase baseband VGA 46A are applied directly to lowband RF mixer 47A. In addition, lowband RF mixer 47A receives the RF in-phase differential signals, Vlop and Vlom, from lowband in-phase LO buffer 89 of LO system 42. Although not illustrated in FIG. 7, lowband RF mixer 47A also receives the intermediate frequency quadrature differential signals from quadrature baseband VGA 46B and the RF quadrature differential signals from lowband quadrature LO buffer 90 of LO system 42.

Lowband RF mixer 47A mixes the intermediate frequency differential signals from VGAs 46 with the RF differential signals from lowband LO buffers 89, 90 to generate RF differential signals. The RF differential signals, Imixp and Imixm, output from lowband RF mixer 47A are applied to lowband RF VGA 48A.

In the GSM communication mode, the differential input current, Idacp and Idacm, input to up-converter 44B does not vary with the gain control setting from digital controller 40. In the GSM communication mode the gain control setting is fixed. In the CDMA communication mode, the differential input current, Idacp 120 and Idacm 122, input to up-converter 44 is reduced by reducing reference current 41, which is a function of the gain control signal for baseband filters 45. As the differential input current is reduced, gm2 is reduced; this results in the bandwidth of in-phase baseband filter 45A being reduced. To compensate, the gm1 value is increased to keep the product gm1*gm2 constant.

In the illustrated embodiment of up-converter 44B, the phase of a CDMA signal may vary with the voltage PDM setting, which may result in unwanted phase steps. In order to minimize changes in CDMA signals, the bandwidth of baseband filter 45A will be set wider than needed for the CDMA communication mode so that even if the bandwidth is reduced there will be minimal effect on the phase. Another approach to minimize the variance of the CDMA signal is to reduce the range of reference current 41. Another approach is to keep reference current 41 varying but keep the current through gm2 constant, by adding a current in parallel with the input current.

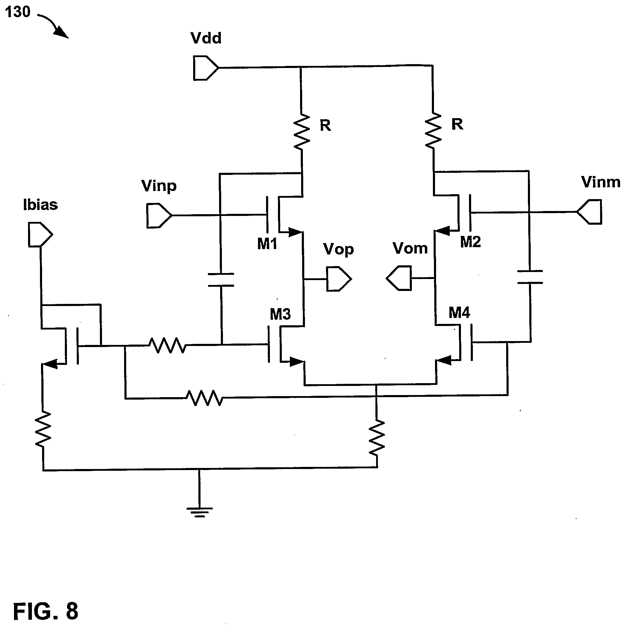

FIG. 8 illustrates an exemplary embodiment of a LO buffer 130 within LO system 24 that drives the one of RF mixers 47 associated with the frequency band of the selected communication mode. As described above in reference to LO system 24 from FIG. 4, LO buffer 130 may drive the one of RF mixers 47 associated with the frequency band of the selected communication mode by buffering the RF LO signal from oscillator 87 to either divide by 4 module 88 for the low frequency band or divide by 2 module 92 for the high frequency band.

LO buffer 130 comprises a push pull amplifier that is able to dynamically source and sink current. When the differential input voltage, Vinp and Vinm, is increased, transistors M1 and M2 supply current to the load. When the differential input voltage drops, the drain voltage of transistors M1 and M2 increase. This results in the gate voltage of transistors M3 and M4 increasing, which helps to sink current from the load. LO buffer 130 then sends the differential RF LO signal outputs, Vop and Vom, to either divide by 4 module 88 or divide by 2 module 92 based on the frequency band of the selected communication mode.

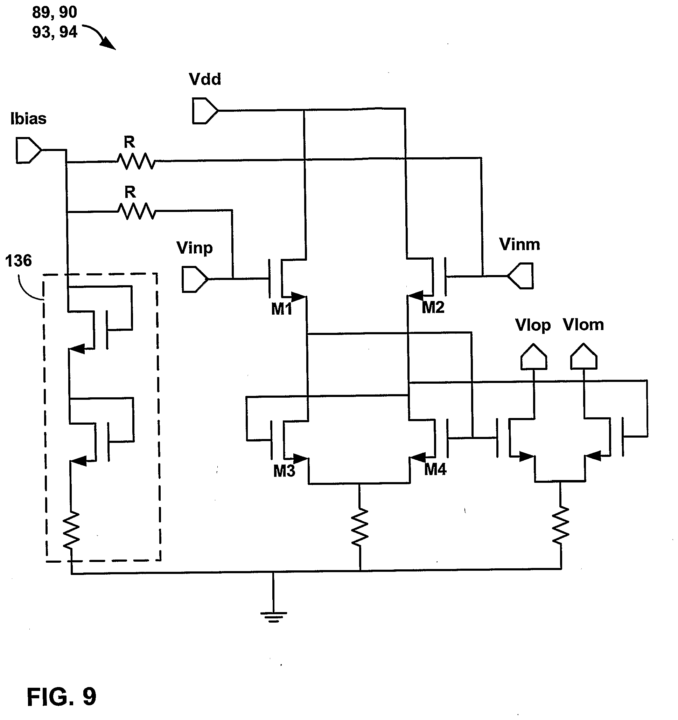

FIG. 9 illustrates an exemplary embodiment of any of lowband LO buffers 89, 90 or highband LO buffers 93, 94 from FIG. 4. In the case where the frequency band of the selected communication mode is the low frequency band, lowband LO buffers 89 and 90 receive differential signals from divide by 4 module 88. Lowband LO buffers 89 and 90 then buffer the differential outputs to the calibration LO path coupled to lowband RF mixer 47A. In the case wherein the frequency band of the selected communication mode is the high frequency band, highband LO buffers 93 and 94 receive differential signals from divide by 2 module 92. Highband LO buffers 93 and 94 then buffer the differential outputs to the calibration LO path coupled to highband RF mixer 47B.

LO buffer 89, 90, 93 or 94 includes source follower transistors M1 and M2 that receive the respective differential input voltages, Vinp and Vinm, from either divide by 4 module 88 or divide by 2 module 92. The LO signal to the gates of M1 and M2 is AC coupled. Cross coupled transistors M3 and M4 help to sink the current, and also set the bias current in the open drain output stage. LO buffer 89, 90, 93 or 94 also includes a bias circuit 136 that includes two diode connected transistors and a resistor. Bias circuit 136 replicates the voltage drops in transistors M1 and M3 for the plus RF signal and in transistors M2 and M4 for the minus RF signal. LO buffer 89, 90, 93 or 94 outputs differential RF LO signals, Vlop and Vlom, to the one of RF mixers 47 associated with the frequency band of the selected communication mode.

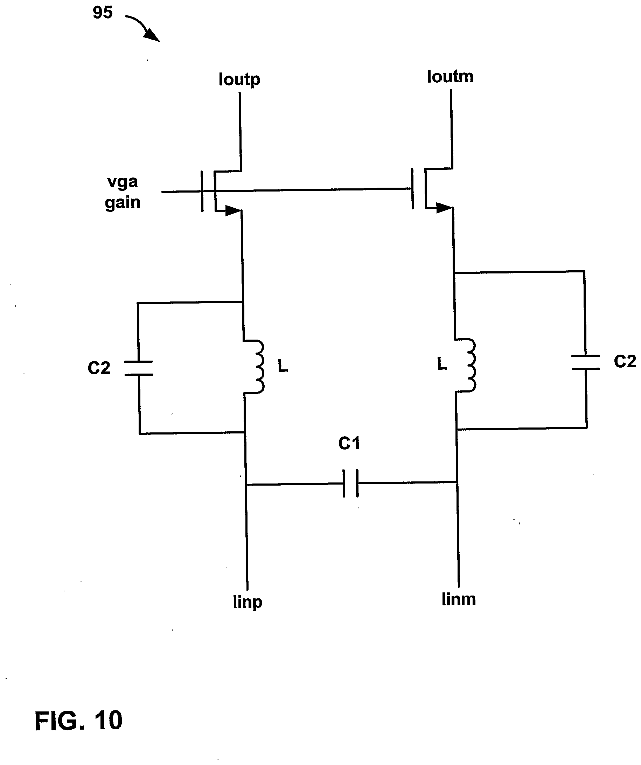

FIG. 10 illustrates an exemplary embodiment of a harmonic reject filter from FIG. 4. For purposes of illustration, FIG. 10 shows only harmonic reject filter 95, which filters RF differential signals from lowband RF mixer 47A into lowband RF VGA 48A. It may be assumed that harmonic reject filter 99 that filters RF differential signals from highband RF mixer 47B into highband RF VGA 48B is substantially similar to harmonic reject filter 95. In some cases, harmonic reject filters may be cascaded to achieve higher rejection.

Harmonic reject filter 95 receives RF differential signals, Iinp and Iinm, from lowband RF mixer 47A. Harmonic reject filter 95 then rejects third and higher order harmonics of the RF differential signals from lowband RF mixer 47A. The values of L and C2 are resonant at the third harmonic, which causes the impedance to be very high at the third harmonic of the RF differential signals. This forces the RF differential signals from lowband RF mixer 47A to flow through C1, which becomes lower and lower impedance at higher frequencies. Harmonic reject filter 95 then sends the filtered RF differential signals, Ioutp and Ioutm, to lowband RF VGA 48A.

If harmonic reject filter 95 were not included in up-converter 44, the harmonics of the RF differential signals would mix with the fundamentals of the RF differential signals in lowband driver amplifier 50A due to third order non-linearity in lowband driver amplifier 50A. The third order non-linearity degrades the adjacent channel leakage ratio of transmitter 20. The better the adjacent channel leakage ratio of transmitter 20, the less power interference transmitter 20 generates in the adjacent channel.

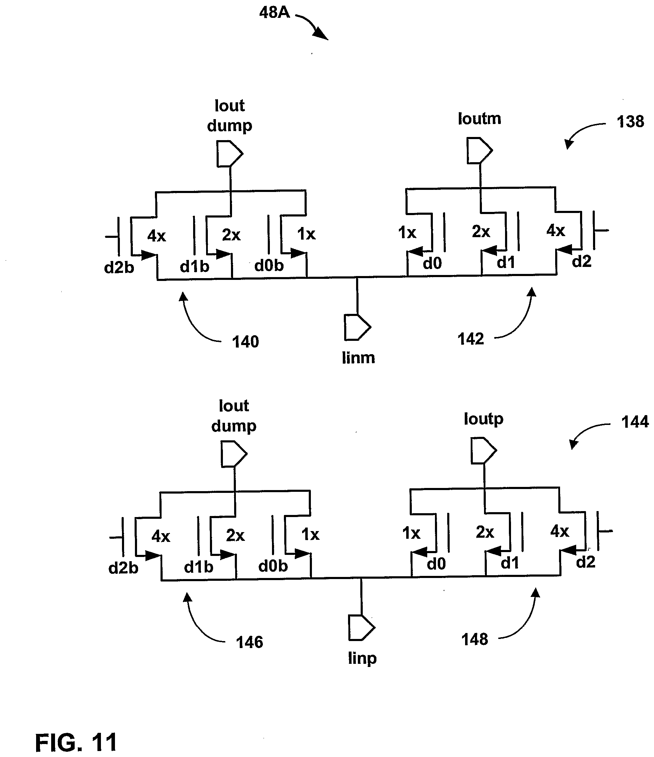

FIG. 11 illustrates an exemplary embodiment of one of RF VGAs 48 from FIG. 4. For purposes of illustration, FIG. 9 shows only lowband RF VGA 48A, which includes a minus attenuator 138 for the minus RF signal, and a plus attenuator 144 for the plus RF signal received from lowband RF mixer 47A. It may be assumed that highband RF VGA 48B is substantially similar to lowband RF VGA 48A. Typically, RF VGAs comprise 8-bit current attenuators controlled by a set of eight switches and a set of eight dump switches. Each current attenuator comprises five binary weighted NFETS and seven thermometer coded stages. The thermometer coding helps to maintain good linearity of the output current with the gain control signal from digital controller 40. In the illustrated embodiment, only three switches are shown in lowband RF VGA 48A for simplicity.

When the frequency band of the selected communication mode comprises the low frequency band, lowband RF VGA 48A either amplifies or attenuates the RF differential signals output from lowband RF mixer 47A based on the gain set by the gain control signal for the one of the RF VGAs associated with the frequency band of the selected communication mode from digital controller 40. The differential output current of lowband RF mixer 47A is applied to the inputs, Iinm and Iinp, of lowband RF VGA 48A.

Minus attenuator 138 includes a set of dump switches 140 and a set of switches 142 controlled by the gain control signal. The gain control signal from digital controller 40 determines how much of the differential input current is routed to the output, Ioutm, of minus attenuator 138 based on set of switches 142 and how much is routed to the dump output, Iout_dump, of minus attenuator 138 based on set of dump switches 140. Plus attenuator 144 includes a set of dump switches 146 and a set of switches 148 also controlled by the gain control signal. The gain control signal from digital controller 40 determines how much of the differential input current is routed to the output, Ioutp, of plus attenuator 144 based on set of switches 148 and how much is routed to the dump output, Iout_dump, of plus attenuator 144 based on set of dump switches 146. The layout of lowband RF VGA 48A is critical to keep the isolation between the input and output signals greater than the required attenuation of 30 dB.

For example, when the gain control signal from digital controller 40 sets all of the switches within sets of switches 142 and 148 high (i.e., all dump switches within sets of dump switches 140 and 146 set low), all of the differential input current is routed to the differential outputs, Ioutm and Ioutp, of respective differential attenuators 138 and 144. When the gain control signal sets all of the switches within sets of switches 142 and 148 low (i.e., all dump switches within sets of dump switches 140 and 146 set high), all of the differential input current is routed to the differential dump outputs, Iout_dump, of differential attenuators 138 and 144. The sets of switches are binary weighted; therefore, if the gain control signal sets only some of the switches (e.g., 2 of the 3 switches) within set of switches 142 and 148 high, a corresponding amount (e.g., 2/3rds) of the differential input current will be routed to the differential outputs of the differential attenuators and the remaining amount (e.g., 1/3rd) of the differential input current will be dumped.

As described above, in the illustrated example, sets of switches 142 and 148 each include only three switches, d0-d2, and sets of dump switches 140 and 142 each include only three dump switches d0b-d2b. Typically, lowband RF VGA 48A has 8-bit gain control from a look-up table for the one of RF VGAs 48 associated with the frequency band of the selected communication mode, e.g., RF VGA LUT 118 from FIG. 5. Therefore, sets of switches 142 and 148 and sets of dump switches 140 and 146 within lowband RF VGA 48A may each include up to eight switches, d0-d7.

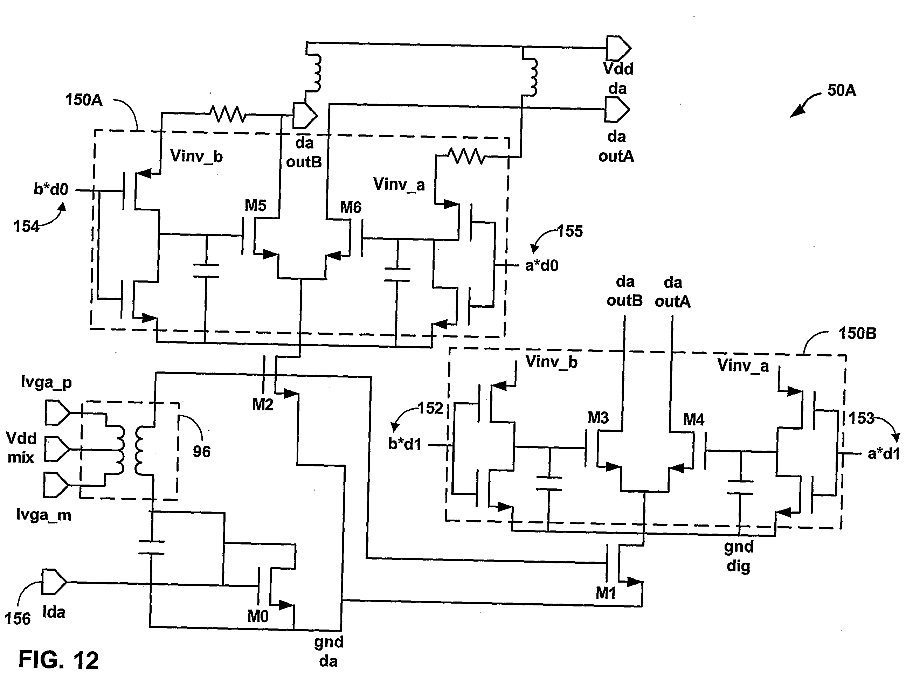

FIG. 12 illustrates an exemplary embodiment of one of driver amplifiers 50 from FIG. 4. For purposes of illustration, FIG. 10 shows only lowband driver amplifier 50A. It may be assumed that highband driver amplifier 50B is substantially similar to lowband driver amplifier 50A. Typically, driver amplifiers include 8 switch cascade stages to have 8-bit control with five binary weighted switches and three thermometer encoded switches to improve gain control linearity. In the illustrated embodiment, only two switch cascade stages are shown in lowband driver amplifier 50A for simplicity.

Lowband RF VGA 48A from FIG. 9 outputs RF differential signals, Ivga_p and Ivga_m, to transformer 96, which generates a single RF signal from the RF differential signals. The input signal is applied to lowband driver amplifier 50A via transformer 96. Transformer 96 may be designed to have a turns ratio of approximately 3:1. Transformer 96 then provides current gain by impedance transformation. The primary side of transformer 96 is connected to the differential output of lowband RF VGA 48A. The center tap of the primary side of transformer 96 provides a bias for the lowband RF mixer/VGA stack. The input impedance on the primary side of transformer 96 is set by the reflected input impedance of lowband driver amplifier 50A. The real part of this input impedance is approximately set by the bond wire inductance times the width of lowband driver amplifier 50A. In the illustrated embodiment, four bond wires in parallel are used to lower the input impedance and to provide sufficient gain.

The secondary side of transformer 96 is connected to binary and thermometer decoded switch cascade stages 150A and 150B within lowband driver amplifier 50A. Transistor M1 connects the input current from transformer 96 to stage 150B and transistor M2 connects the input current from transformer 96 to stage 150A. Transistors M1 and M2 are binary weighted; therefore the amount of the input current applied to each of stages 150A and 150B is determined by the weight of respective transistors M2 and M1. Lowband driver amplifier 50A also receives a bias input current, Ida, 156 from a driver amplifier bias circuit. Ida 156 is input to transistor M0 that reduces thermal noise within lowband driver amplifier 50A from transformer 96.

Upon receiving the RF input signal via transformer 96, stages 150A and 150B either amplify or attenuate the RF signal from lowband RF VGA 48A based on the gain set by the gain control signal for the one of the driver amplifiers associated with the frequency band of the selected communication mode from digital controller 40. Stage 150A receives one of inputs a*d0 154 and b*d0 155, and stage 150B receives one of inputs a*d1 153 and b*d1 154 depending on which one of output ports A and B is selected based on the selected communication mode. The values of d0 and d1 may be set by the gain control signal for the one of the driver amplifiers associated with the frequency band of the selected communication mode from digital controller 40. In addition, only one of transistors M5 and M6 within stage 150A and one of transistors M3 and M4 within stage 150B are turned on based on the selected output port associated with the selected communication mode.

Switch cascade stages 150A and 150B are substantially identical to one another and route the output current of the common source stages to the selected one of output ports, da_outA or da_outB, of lowband driver amplifier 50A. As described above, digital controller 40 selects the output port based on the selected communication mode, e.g., CDMA or GSM. For example, output port A may be designated as the CDMA communication mode output port 97 of lowband driver amplifier 50A. In addition, output port B may be designated as the GSM communication mode output port 98 of lowband driver amplifier 50A.

As described above, in the illustrated example, lowband driver amplifier 50A only includes two switch cascade stages 150A with input d0 and 150B input d1. Typically, lowband driver amplifier 50A has 8-bit gain control from a look-up table for the one of driver amplifiers 50 associated with the frequency band of the selected communication mode, e.g., driver amplifier LUT 119 from FIG. 5. Therefore, lowband driver amplifier 50A may include up to eight switch cascade states with inputs d0-d7.

The outputs of the binary weighted stages 150A and 150B are combined in two output coils. The coils along with an external capacitor are used to match the outputs of the da_outA and da_outB outputs to 50 ohms. The match is optimized under large signal conditions. At maximum output power, lowband driver amplifier 50A may be biased at approximately 20 mA. The bias current of lowband driver amplifier 50A increases as the input voltage, Vinv_a and Vinv_b increases. Typically, the gain control range of lowband driver amplifier is approximately 33 dB.

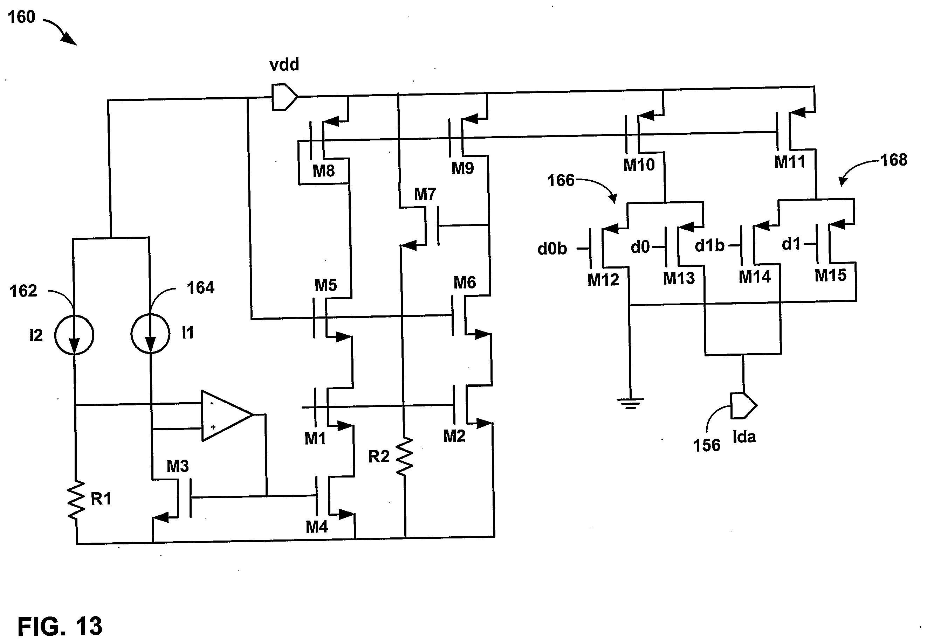

FIG. 13 illustrates an exemplary embodiment of a driver amplifier bias circuit 160 that provides a bias input current to one of driver amplifiers 50. In the illustrated embodiment, bias circuit 160 provides Ida 156 to lowband driver amplifier 50A from FIG. 10. Bias current Ida 156 of lowband driver amplifier 50A is applied a diode connected device, and the gate voltage of the transistors within lowband driver amplifier 50A is connected to this diode via the secondary side of transformer 96.

Driver amplifiers 50 require special bias circuitry to reduce gain variation over process and temperature. Bias circuit 160 comprises transistors M1 to M9 in a constant circuit that receives input current I1 164 and I2 162. The constant circuit causes the current in transistor M1 to be proportional to $\dfrac{1}{\mu * Cox * Rds\_M4^2}$, where Rds_M4 is the channel resistance of transistor M4, which is directly proportional to an accurate external resistor and inversely proportional to temperature. This results in a higher increase in Ida 156 for lowband driver amplifier 50A, which helps to keep the gain of bias circuit 160 constant over temperature.

A number of embodiments have been described. However, various modifications to these embodiments are possible, and the principles presented herein may be applied to other embodiments as well. Methods as described herein may be implemented in hardware, software, and/or firmware. The various tasks of such methods may be implemented as sets of instructions executable by one or more arrays of logic elements, such as microprocessors, embedded controllers, or IP cores. In one example, one or more such tasks are arranged for execution within a mobile station modem chip or chipset that is configured to control operations of various devices of a personal communications device such as a cellular telephone.

The techniques described in this disclosure maybe implemented within a general purpose microprocessor, application specific integrated circuit (ASIC), field programmable gate array (FPGA), or other equivalent logic devices. If implemented in software, the techniques may be embodied as instructions on a computer-readable medium such as random access memory (RAM), read-only memory (ROM), non-volatile random access memory (NVRAM), electrically erasable programmable read-only memory (EEPROM), FLASH memory, or the like. The instructions cause one or more processors to perform certain aspects of the functionality described in this disclosure.

As further examples, an embodiment may be implemented in part or in whole as a hard-wired circuit, as a circuit configuration fabricated into an application-specific integrated circuit, or as a firmware program loaded into non-volatile storage or a software program loaded from or into a data storage medium as machine-readable code, such code being instructions executable by an array of logic elements such as a microprocessor. The data storage medium may be an array of storage elements such as semiconductor memory (which may include without limitation dynamic or static RAM, ROM, and/or flash RAM) or ferroelectric, ovonic, polymeric, or phase-change memory; or a disk medium such as a magnetic or optical disk.

In this disclosure, various techniques have been described. For example, techniques are described that allow operation according to two or more different communication modes in a single modulation path of a variable RF modulator within a multi-mode WCD. A multi-mode WCD supports operation in two or more different communication modes. The multi-mode WCD may detect a service signal from a base station within a wireless communication system and select a communication mode in which to operate based on the communication mode of the detected service signal. The techniques described herein enable the multi-mode WCD to set parameters, such as gain, bandwidth, bias current, bias voltage, and common mode voltage, of variable components within the RF modulator based on the selected communication mode. In this way, the single modulation path of the variable RF modulator may be set to process an audio or video signal from a user of the WCD according to the communication mode in which the multi-mode WCD is operating.

Although described primarily in reference to high and low frequency band of the CDMA communication mode and the GSM communication mode, the techniques may be applied to additional communication modes or different communication modes including a variety of operational frequency bands. In addition, the techniques are described herein as operating within a RF modulator of a WCD. However, the techniques may also be applied to operate within a transceiver of a WCD. For example, the techniques may operate within an 802.11 transceiver. These and other embodiments are within the scope of the following claims.

**Claims**

**1.** A method comprising:

operating two or more communication modes in a single modulation path of a variable radio frequency, RF, modulator (22) included in a multi-mode wireless communication device, WCD, (14) that supports the two or more communication modes, the single modulation path configured to process differential signals and including in-phase baseband variable filter (45A), quadrature baseband variable filter (45B), in-phase baseband variable gain amplifier (46A) quadrature baseband variable gain amplifier (46B), and a first RF mixer (47A) for communication modes in a first frequency band and a second RF mixer (47B) for communication modes in a second frequency band, the baseband variable filters and the baseband variable gain amplifiers forming a single reconfigurable path for each of the two or more communication modes and each baseband variable gain amplifier driving the one of the first RF mixer and the second RF mixer associated with a selected one of the two or more communication modes; and

processing, in the single modulation path, a signal from a user of the multi-mode WCD according to the selected one of the two or more communication modes by setting parameters of variable components along the single modulation path of the variable RF modulator based on the selected one of the communication modes; and wherein processing a signal from a user of the multi-mode WCD comprises:

filtering a baseband user signal with the baseband filters based on the parameter setting;
amplifying the filtered baseband user signal with the baseband variable gain amplifiers based on the parameter setting to generate an intermediate frequency user signal;
applying the intermediate frequency user signal to the RF mixer associated with the frequency band of the selected communication mode;

mixing the intermediate frequency user signal and a RF signal from a local oscillator with the RF mixer to generate a RF user signal.

2. The method of claim 1, wherein operating two or more communication modes comprises operating the code division multiple access, CDMA, communication mode and the Global System for Mobile Communications, GSM, communication mode in the single modulation path of the variable RF modulator.

3. The method of claim 2, further comprising configuring a CDMA modulation path of the variable RF modulator to support the GSM communication mode.

4. The method of claim 1, further comprising selecting one of the two or more communication modes in which to operate the multi-mode WCD based on a detected service signal.

5. The method of claim 4, further comprising:

searching for a first service signal conforming to a first one of the two or more communication modes supported by the multi-mode WCD; and
searching for a second service signal conforming to a second one of the two or more communication modes when the multi-mode WCD does not detect the first service signal.

6. The method of claim 5, wherein the first service signal conforms to the code division multiple access, CDMA, communication mode, and the second service signal conforms to the Global System for Mobile Communications, GSM, communication mode.

7. The method of claim 1 further comprising:

selecting said communication mode in which to run said multi-mode wireless communication device, WCD, based on a detected service signal;
determining said parameters and output power for said frequency band of the selected communication mode;
setting said parameters of variable components along said single modulation path of said variable radio frequency, RF, modulator included in the multi-mode WCD based on the determined parameters; and
processing said signal from said user of the multi-mode WCD with the variable RF modulator according to the selected communication mode.

8. The method of claim 7, wherein selecting the communication mode comprises:

selecting a first communication mode supported by the multi-mode WCD in which to run the multi-mode WCD when the detected service signal conforms to the first communication mode; and
selecting a second communication mode supported by the multi-mode WCD in which to run the multi-mode WCD when the detected service signal conforms to the second communication mode.

9. The method of claim 7, further comprising:

   determining a communication mode to which the detected service signal conforms and a frequency band of the communication mode in which the detected service signal operates;
   selecting the communication mode in which to run the multi-mode WCD based on the communication mode to which the detected service signal conforms; and
   determining parameters and output power for the frequency band of the communication mode in which the service signal operates.

10. The method of claim 7, wherein setting parameters of the variable components along the single modulation path of the variable RF modulator comprises generating gain control signals for each of the variable components with a digital controller included in the variable RF modulator based on the determined parameters.

11. The method of claim 10, wherein the digital controller includes look-up tables corresponding to each of the variable components, and wherein generating gain control signals comprises generating the gain control signals for each of the variable components with the respective one of the look-up tables based on a gain range and a gain rate for each of the variable components.

12. The method of claim 7, wherein the variable components along the single modulation path of the variable RF modulator comprise the baseband filters, the baseband variable gain amplifiers, RF variable gain amplifiers, and driver amplifiers, wherein setting parameters of the variable components comprises:

    setting parameters of the baseband filters via a reference current;
    setting parameters of the baseband variable gain amplifiers;
    setting parameters of one of the RF variable gain amplifiers associated with the frequency band of the selected communication mode; and
    setting parameters of one of the driver amplifiers associated with the frequency band of the selected communication mode.

13. The method of clam 12, wherein processing a signal from a user of the multi- mode WCD further comprises:

    attenuating the RF user signal with the one of the RF variable gain amplifier based on the parameter setting; and
    amplifying the RF user signal with the one of the driver amplifier based on the parameters setting to provide sufficient gain and output power for the frequency band of the selected communication mode.

14. The method of claim 7, further comprising:

    selecting an output port of the variable RF modulator based on the selected communication mode; and
    sending the processed user signal with sufficient gain and output power for the frequency band of the selected communication mode from the variable RF modulator to a transmitter included in the multi-mode WCD via the selected output port.

15. A computer-readable medium comprising instructions that cause the programmable processor to:

    operate two or more communication modes in a single modulation path of a variable radio frequency, RF, modulator (22) included in a multi-mode wireless communication device, WCD, (14) that supports the two or more communication modes, the single modulation path configured to process differential signals and including in-phase baseband variable filter (45A), quadrature baseband variable filter (45B), in-phase baseband variable gain amplifier (46A), quadrature baseband variable gain amplifier (46B), and a first RF mixer (47A) for communication modes in a first frequency band and a second RF mixer (47B) for communication modes in a second frequency band, the baseband variable filters and the baseband variable gain amplifiers forming a single reconfigurable path for each of the two or more communication modes and each baseband variable gain amplifier driving the one of the first RF mixer and the second RF mixer associated with a selected one of the two or more communication modes; and
    process, in the single modulation path, a signal from a user of the WCD according to a selected one of the two or more communication modes by setting parameters of variable components along the single modulation path of the variable RF modulator based on the selected one of the communication modes; and
    wherein the instructions cause the programmable processor to:

filter a baseband user signal with the baseband filters based on the parameter setting via a reference current;
amplify the filtered baseband user signal with the baseband variable gain amplifiers based on the parameter setting to generate an intermediate frequency user signal;
apply the intermediate frequency user signal to the RF mixer associated with the frequency band of the selected communication mode;
mix the intermediate frequency user signal and a RF signal from a local oscillator with the RF mixer to generate a RF user signal.

16. The computer-readable medium of claim 15, further comprising instructions that cause the programmable processor to select one of the two or more communication modes in which to operate the multi-mode WCD based on a detected service signal.

17. The computer-readable medium of claim 16, further comprising instructions that cause the programmable processor to:

search for a first service signal conforming to a first one of the two or more communication modes supported by the multi-mode WCD; and
search for a second service signal conforming to a second one of the two or more communication modes when the multi-mode WCD does not detect the first service signal.

18. The computer-readable medium of claim 15, further comprising instructions that cause the programmable processor to:

select the communication mode in which to run the multi-mode wireless communication device, WCD, based on a detected service signal;
determine the parameters and output power for the frequency band of the selected communication mode;
set the parameters of variable components along the single modulation path of the variable radio frequency, RF, modulator included in the multi-mode WCD based on the determined parameters; and
process the signal from the user of the multi-mode WCD with the variable RF modulator according to the selected communication.

19. The computer-readable medium of claim 18, wherein the instructions cause the programmable processor to generate gain control signals for each of the variable components with a digital controller included in the variable RF modulator based on the determined parameters.

20. The computer-readable medium of claim 18, wherein the variable components along the single modulation path of the variable RF modulator comprise the baseband filters, the baseband variable gain amplifiers, RF variable gain amplifiers, and driver amplifiers, wherein the instructions cause the programmable processor to:

attenuate the RF user signal with one of the RF variable gain amplifiers associated with the frequency band of the selected communication mode based on the parameter setting; and
amplify the RF user signal with one of the driver amplifiers associated with the frequency band of the selected communication mode based on the parameter setting to provide sufficient gain and output power for the frequency band of the selected communication mode.

21. The computer-readable medium of claim 18, further comprising instructions that cause the programmable processor to:

select an output port of the variable RF modulator based on the selected communication mode; and
send the processed user signal with sufficient gain and output power for the frequency band of the selected communication mode from the variable RF modulator to a transmitter included in the multi-mode WCD via the selected output port.

22. A multi-mode wireless communication device, WCD, (14) that supports two or more communication modes comprising a variable radio frequency, RF, modulator (22) that operates the two or more communication modes in a single modulation path of the variable RF modulator, the single modulation path configured to process differential signals and including in-phase baseband variable filter (45A) and quadrature baseband variable filter (45B) each connected to a corresponding in-phase baseband variable gain amplifier (46A) and quadrature baseband variable gain amplifier (46B) which are both connected to a first RF mixer (47A) for communication modes in a first frequency band and a second RF mixer (47B) for communication modes in a second frequency band, the baseband variable filters and the baseband variable gain amplifiers forming a single reconfigurable path for each of the two or more communication modes and each baseband variable gain amplifier driving the one of the first RF mixer and the second RF mixer associated with a selected one of the two or more communication modes, wherein the variable RF modulator processes a signal from a user of the multi-mode WCD according to a selected one of the two or more communication modes by setting parameters of variable components along the single modulation path of the variable RF modulator based on the selected one of the communication modes.

23. The multi-mode WCD of claim 22, wherein the variable RF modulator operates the code division multiple access, CDMA, communication mode and the Global System for Mobile Communications, GSM, communication mode in the single modulation path of the variable RF modulator.

24. The multi-mode WCD of claim 23 , wherein the variable RF modulator - configures a CDMA modulation path of the variable RF modulator to support the GSM communication mode.

25. The multi-mode WCD of claim 22, further comprising a mobile station modem, MSM, that selects one of the two or more communication modes in which to operate the multi-mode WCD based on a detected service signal.

26. The multi-mode WCD of claim 25, wherein the MSM searches for a first service signal conforming to a first one of the two or more communication modes supported by the multi-mode WCD, and searches for a second service signal conforming to a second one of the two or more communication modes when the multi-mode WCD does not detect the first service signal.

27. The multi-mode WCD of claim 26, wherein the first service signal conforms to the code division multiple access, CDMA, communication mode, and the second service signal conforms to the Global System for Mobile Communications, GSM, communication mode.

28. The multi-mode WCD of claim 22, wherein parameters of the variable components comprise one or more of gain, bandwidth, bias current, bias voltage, and common mode voltage.

29. The multi-mode WCD (14) of claim 22, further comprising:

a receiver (20) that detects a service signal;
a mobile station modem, MSM, (24) that selects the communication mode in which to run the multi-mode WCD based on the detected service signal, and determines parameters and output power for the frequency band of the selected communication mode; and
the variable radio frequency, RF, modulator (22) including a digital controller (40) that sets parameters of variable components along the single modulation path of the variable RF modulator based on the determined parameters from the MSM, wherein the variable RF modulator processes the signal from the user of the WCD according to the selected communication mode.

30. The multi-mode WCD of claim 29, wherein the MSM:

selects a first communication mode supported by the multi-mode WCD in which to run the multi-mode WCD when the detected service signal conforms to the first communication mode; and
selects a second communication mode supported by the multi-mode WCD in which to run the multi-mode WCD when the detected service signal conforms to the second communication mode.

31. The multi-mode WCD of claim 29, wherein the MSM:

determines a communication mode to which the detected service signal conforms and a frequency band of the communication mode in which the detected service signal operates;
selects the communication mode in which to run the multi-mode WCD based on the communication mode to which the detected service signal conforms; and
determines parameters and output power for the frequency band of the communication mode in which the service signal operates.

**32.** The multi-mode WCD of claim 29, wherein the digital controller included in the variable RF modulator generates gain control signals for each of the variable components based on the determined parameters from the MSM.

**33.** The multi-mode WCD of claim 32, wherein the digital controller includes lookup tables corresponding to each of the variable components, and generates the gain control signals for each of the variable components with the respective one of the lookup tables based on a gain range and a gain rate for each of the variable components.

**34.** The multi-mode WCD of claim 29, wherein the variable components along the single modulation path of the variable RF modulator comprise the baseband filters, the baseband variable gain amplifiers, RF variable gain amplifiers, and driver amplifiers, wherein the digital controller:

sets parameters of the baseband filters via a reference current;
sets parameters of the baseband variable gain amplifiers;
sets parameters of one of the RF variable gain amplifiers associated with the frequency band of the selected communication mode; and
sets parameters of one of the driver amplifiers associated with the frequency band of the selected communication mode.

**35.** The multi-mode WCD of clam 34, wherein:

the baseband filters filter a baseband user signal based on the parameter setting;
the baseband variable gain amplifiers amplify the baseband user signal based on the parameter setting to generate an intermediate frequency user signal, and apply the intermediate frequency user signal to the RF mixer associated with the frequency band of the selected communication mode;
the RF mixer mixes the intermediate frequency user signal and a RF signal from a local oscillator to generate a RF user signal;
the one of the RF variable gain amplifiers attenuates the RF user signal based on the parameter setting; and
the one of the driver amplifiers amplifies the RF user signal based on the parameter setting to provide sufficient gain and output power for the frequency band of the selected communication mode.

**36.** The multi-mode WCD of claim 29, wherein the digital controller selects an output port of a driver amplifier included in the variable RF modulator based on the selected communication mode, and wherein the driver amplifier sends the processed user signal with sufficient gain and output power for the frequency band of the selected communication mode from the variable RF modulator to a transmitter included in the multi-mode WCD via the selected output port.

**37.** The multi-mode WCD of claim 29, wherein the RF modulator includes an up- converter comprising:

baseband filters with cascade transistors that low pass filter a baseband user signal and capacitors that control bandwidth of the baseband filters in accordance with parameter settings;
baseband variable gain amplifiers with transistor pairs forming current mirrors that amplify the baseband user signal from the baseband filters in accordance with transistor bit switches set by parameter settings; and
first and second RF mixers with transistor pairs that mix an intermediate frequency user signal from the baseband variable gain amplifiers with an RF signal from a local oscillator to generate a RF user signal.

**38.** The multi-mode WCD of claim 29, wherein the RF modulator includes RF variable gain amplifiers with transistor bit switches set by parameter settings to attenuate an RF user signal.

**39.** The multi-mode WCD of claim 29, wherein the RF modulator includes driver amplifiers with transistors that connect switch cascade stages to a received RF user signal, wherein the switch cascade stages amplify the received RF user signal in accordance with parameter settings to provide sufficient gain and output power for the frequency band of the selected communication mode.

**40.** The multi-mode WCD of claim 39, wherein the RF modulator includes driver amplifier bias circuits with a transistor constant circuit that generates a bias input current for the driver amplifiers to reduce thermal noise in the driver amplifiers.

**41.** The multi-mode WCD of clam 29, wherein the multi-mode WCD supports two or more communication modes.

**42.** The multi-mode WCD of claim 29, wherein the selected communication mode comprises one of the code division multiple access, CDMA, communication mode or the Global System for Mobile Communications, GSM, communication mode.

**43.** The multi-mode WCD of claim 29, wherein the frequency band of the selected communication mode comprises one of a high frequency band or a low frequency band of the selected communication mode.

**44.** The multi-mode WCD of claim 29, wherein parameters of the variable components comprise one or more of gain, bandwidth, bias current, bias voltage, and common mode voltage.

**Patentansprüche**

**1.** Ein Verfahren, das Folgendes aufweist:

Betreiben von zwei oder mehr Kommunikationsmodi in einem einzelnen Modulationspfad eines variablen Hochfrequenz- bzw. HF-Modulators (22), der in einer Multimodus-Drahtloskommunikationseinrichtung bzw. WCD (WCD = wireless communication device) (14) enthalten ist, die zwei oder mehr Kommunikationsmodi unterstützt, wobei der einzelne Modulationspfad konfiguriert ist zum Verarbeiten differenzieller Signale und Folgendes aufweist: ein variables In-Phase-Basisbandfilter (45A), ein variables Quadratur-Basisbandfilter (45B), einen variablen In-Phase-Basisbandverstärker (46A), einen variablen Quadratur-Basisbandverstärker (46B) und einen ersten HF-Mischer (47A) für Kommunikationsmodi in einem ersten Frequenzband und einen zweiten HF-Mischer (47B) für Kommunikationsmodi in einem zweiten Frequenzband, wobei die variablen Basisbandfilter und die variablen Basisbandverstärker einen einzelnen rekonfigurierbaren Pfad für jeden der zwei oder mehr Kommunikationsmodi bilden und jeder variable Basisbandverstärker den einen von dem ersten HF-Mischer und dem zweiten HF-Mischer, der mit einem ausgewählten einen der zwei oder mehr Kommunikationsmodi assoziiert ist, speist; und
Verarbeiten, in dem einzelne Modulationspfad, eines Signals von einem Nutzer der Multimodus-WCD gemäß dem ausgewählten einen der zwei mehr Kommunikationsmodi durch Festlegen bzw. Einstellen von Parametern variabler Komponenten entlang des einzelnen Modulationspfades des variablen HF-Modulators basierend auf dem ausgewählten einen der Kommunikationsmodi; und
wobei Verarbeiten eines Signals von einem Nutzer der Multimodus-WCD Folgendes aufweist:

Filtern eines Basisbandnutzersignals mit den Basisbandfiltern basierend auf der Parametereinstellung;
Verstärken des gefilterten Basisbandnutzersignals mit den variablen Basisbandverstärkern basierend auf der Parametereinstellung zum Generieren eines Zwischenfrequenznutzersignals;
Anwenden des Zwischenfrequenznutzersignals auf den HF-Mischer, der mit dem Frequenzband des ausgewählten Kommunikationsmodus assoziiert ist;
Mischen des Zwischenfrequenznutzersignals und eines HF-Signals von einem lokalen Oszillator mit dem HF-Mischer zum Generieren eines HF-Nutzersignals.

**2.** Verfahren nach Anspruch 1, wobei das Betreiben von zwei oder mehr Kommunikationsmodi Betreiben des Codemultiplex-Vielfachzugriffs- bzw. CDMA-Kommunikationsmodus (CDMA = code division multiple access) und des GSM-Kommunikationsmodus (GSM = Global System for Mobile Communications) in dem einzelnen Modulationspfad des variablen HF-Modulators aufweist.

**3.** Verfahren nach Anspruch 2, das weiter Konfigurieren eines CDMA-Modulationspfades des variablen HF-Modulators zum Unterstützen des GSM-Kommunikationsmodus aufweist.

**4.** Verfahren nach Anspruch 1, das weiter Auswählen von einem der zwei oder mehr Kommunikationsmodi aufweist, in welchem die Multimodus-WCD basierend auf einem detektierten Dienstsignal betrieben werden soll.

**5.** Verfahren nach Anspruch 4, das weiter Folgendes aufweist:

Suchen nach einem ersten Dienstsignal, das zu einem ersten der zwei oder mehr Kommunikationsmodi konform ist, die durch die Multimodus-WCD unterstützt werden; und
Suchen nach einem zweiten Dienstsignal, das zu einem zweiten der zwei oder mehr Kommunikationsmodi konform ist, wenn die Multimodus-WCD das erste Dienstsignal nicht detektiert.

**6.** Verfahren nach Anspruch 5, wobei das erste Dienstsignal zu dem CDMA-Kommunikationsmodus konform ist und das zweite Dienstsignal zu dem GSM-Kommunikationsmodus konform ist.

**7.** Verfahren nach Anspruch 1, das weiter Folgendes aufweist:

Auswählen des Kommunikationsmodus, in dem die Multimodus-Drahtloskommunikationseinrichtung bzw. -WCD basierend auf einem detektierten Dienstsignal arbeiten soll;
Bestimmen der Parameter und Ausgabeleistung für das Frequenzband des ausgewählten Kommunikationsmodus;
Einstellen bzw. Festlegen der Parameter variabler Komponenten entlang des einzelnen Modulationspfades des variablen HF-Modulators, der in der Multimodus-WCD enthalten ist basierend auf den bestimmten Parametern; und
Verarbeiten des Signals von dem Nutzer der Multimodus-WCD mit dem variablen HF-Modulator gemäß dem ausgewählten Kommunikationsmodus.

**8.** Verfahren nach Anspruch 7, wobei das Auswählen des Kommunikationsmodus Folgendes aufweist:

Auswählen eines ersten Kommunikationsmodus, der durch die Multimodus-WCD unterstützt wird, in dem die Multimodus-WCD ausgeführt werden soll, wenn das detektierte Dienstsignal zu dem ersten Kommunikationsmodus konform ist; und
Auswählen eines zweiten Kommunikationsmodus, der durch die Multimodus-WCD unterstützt wird, in dem die Multimodus-WCD ausgeführt werden soll, wenn das detektierte Dienstsignal zu dem zweiten Kommunikationsmodus konform ist.

**9.** Verfahren nach Anspruch 7, das weiter Folgendes aufweist:

Bestimmen eines Kommunikationsmodus, zu dem das detektierte Dienstsignal konform ist und eines Frequenzbandes des Kommunikationsmodus, in dem das detektierte Dienstsignal arbeitet;
Auswählen des Kommunikationsmodus, in dem die Multimodus-WCD ausgeführt werden soll basierend auf dem Kommunikationsmodus, zu dem das detektierte Dienstsignal konform ist; und
Bestimmen von Parametern und Ausgabeleistung für das Frequenzband des Kommunikationsmodus, in dem das Dienstsignal arbeitet.

**10.** Verfahren nach Anspruch 7, wobei das Einstellen bzw. Festlegen von Parametern der variablen Komponenten entlang des einzelnen Modulationspfades des variablen HF-Modulators Generieren von Verstärkungssteuerungssignalen für jede der variablen Komponenten mit einem digitalen Controller aufweist, der in dem variablen HF-Modulator enthalten ist, und zwar basierend auf den bestimmten Parametern.

**11.** Verfahren nach Anspruch 10, wobei der digitale Controller Look-Up- bzw. Nachschlagetabellen aufweist, die jeder der variablen Komponenten entsprechen, und wobei das Generieren von Verstärkungssteuerungssignalen Generieren der Verstärkungssteuerungssignale für jede der variablen Komponenten mit der entsprechenden einen der Nachschlagetabellen basierend auf einem Verstärkungsbereich und einer Verstärkungsrate für jede der variablen Komponenten aufweist.

**12.** Verfahren nach Anspruch 7, wobei die variablen Komponenten entlang des einzelnen Modulationspfades des variablen HF-Modulators die Basisbandfilter, die variablen Basisbandverstärker, variablen HF-Verstärker und Treiberverstärker aufweisen, wobei das Einstellen von Parametern der variablen Komponenten Folgendes aufweist:

Einstellen von Parametern der Basisbandfilter über einen Referenzstrom;
Einstellen von Parametern der variablen Basisbandverstärker;
Einstellen von Parametern von einem der variablen HF-Verstärker, der mit dem Frequenzband des ausgewählten Kommunikationsmodus assoziiert ist; und
Einstellen von Parametern von einem der Treiberverstärker, der mit dem Frequenzband des ausgewählten Kommunikationsmodus assoziiert ist.

**13.** Verfahren nach Anspruch 12, wobei das Verarbeiten eines Signals von einem Nutzer der Multimodus-WCD weiter Folgendes aufweist:

Dämpfen des HF-Nutzersignals mit dem einen der variablen HF-Verstärker basierend auf der Parametereinstellung; und

Verstärken des HF-Nutzersignals mit dem einen der Treiberverstärker basierend auf der Parametereinstellung zum Vorsehen einer ausreichenden Verstärkung und Ausgangsleistung für das Frequenzband des ausgewählten Kommunikationsmodus.

**14.** Verfahren nach Anspruch 7, das weiter Folgendes aufweist:

Auswählen eines Ausgangs-Ports bzw. Ausgangsanschlusses des variablen HF-Modulators basierend auf dem ausgewählten Kommunikationsmodus; und

Senden des verarbeiteten Nutzersignals mit ausreichend Verstärkung und Ausgangsleistung für das Frequenzband des ausgewählten Kommunikationsmodus von dem variablen HF-Modulator an einen Sender, der in der Multimodus-WCD enthalten ist über den ausgewählten Ausgangsanschluss.

**15.** Ein computerlesbares Medium, das Instruktionen aufweist, die den programmierbaren Prozessor veranlassen zum:

Betreiben von zwei oder mehr Kommunikationsmodi in einem einzelnen Modulationspfad eines variablen Hochfrequenz- bzw. HF-Modulators (22), der in einer Multimodus-Drahtloskommunikationseinrichtung bzw. -WCD (WCD = wireless communication device) (14) enthalten ist, die die zwei oder mehr Kommunikationsmodi unterstützt, wobei der einzelne Modulationspfad konfiguriert ist zum Verarbeiten differenzieller Signale und Folgendes aufweist: ein variables In-Phase-Basisbandfilter (45A), ein variables Quadrature-Basisbandfilter (45B), einen variablen In-Phase-Basisbandverstärker (46A), einen variablen Quadratur-Basisbandverstärker (46B) und einen ersten HF-Mischer (47A) für Kommunikationsmodi in einem ersten Frequenzband und einen zweiten HF-Mischer (47B) für Kommunikationsmodi in einem zweiten Frequenzband, wobei die variablen Basisbandfilter und die variablen Basisbandverstärker einen einzelnen rekonfigurierbaren Pfad für jeden der zwei oder mehr Kommunikationsmodi bilden und jeder variable Basisbandverstärker den einen von dem ersten HF-Mischer und dem zweiten HF-Mischer speist, der mit einem ausgewählten einen der zwei oder mehr Kommunikationsmodi assoziiert ist; und

Verarbeiten, in dem einzelne Modulationspfad, eines Signals von einem Nutzer der WCD gemäß einem ausgewählten einen der zwei oder mehr Kommunikationsmodi durch Einstellen von Parametern variabler Komponenten entlang des einzelnen Modulationspfades des variablen HF-Modulators basierend auf dem ausgewählten einen der Kommunikationsmodi; und

wobei die Instruktionen den programmierbaren Prozessor veranlassen zum:

Filtern eines Basisbandnutzersignals mit den Basisbandfiltern basierend auf der Parametereinstellung über einen Referenzstrom;

Verstärken des gefilterten Basisbandnutzersignals mit den variablen Basisbandverstärkern basierend auf der Parametereinstellung zum Generieren eines Zwischenfrequenznutzersignals;

Anwenden des Zwischenfrequenznutzersignals auf den HF-Mischer, der mit dem Frequenzband des ausgewählten Kommunikationsmodus assoziiert ist;

Mischen des Zwischenfrequenznutzersignals und eines HF-Signals von einem Lokaloszillator mit dem HF-Mischer zum Generieren eines HF-Nutzersignals.

**16.** Computerlesbares Medium nach Anspruch 15, das weiter Instruktionen aufweist, die den programmierbaren Prozessor veranlassen zum Auswählen von einem der zwei oder mehr Kommunikationsmodi, in denen die Multimodus-WCD basierend auf einem detektierten Dienstsignal betrieben werden soll.

**17.** Computerlesbares Medium nach Anspruch 16, das weiter Instruktionen aufweist, die den programmierbaren Prozessor veranlassen zum:

Suchen eines ersten Dienstsignals, das zu einem ersten der zwei oder mehr Kommunikationsmodi konform ist, die durch die Multimodus-WCD unterstützt werden; und

Suchen eines zweiten Dienstsignals, das zu einem zweiten der zwei oder mehr Kommunikationsmodi konform ist, wenn die Multimodus-WCD das erste Dienstsignal nicht detektiert.

**18.** Computerlesbares Medium nach Anspruch 15, das weiter Instruktionen aufweist, die den programmierbaren Prozessor veranlassen zum:

Auswählen des Kommunikationsmodus, in dem die Multimodus-Drahtloskommunikationseinrichtung bzw. -WCD ausgeführt werden soll basierend auf einem detektierten Dienstsignal;

Bestimmen der Parameter und Ausgangsleistung für das Frequenzband des ausgewählten Kommunikationsmodus;

Einstellen der Parameter variabler Komponenten entlang des einzelnen Modulationspfades des variablen Hochfrequenz- bzw. HF-Modulators, der in der Multimodus-WCD enthalten ist basierend auf den bestimmten Parametern; und

Verarbeiten des Signals von dem Nutzer der Multimodus-WCD mit dem variablen HF-Modulator gemäß der ausgewählten Kommunikation.

19. Computerlesbares Medium nach Anspruch 18, wobei die Instruktionen den programmierbaren Prozessor veranlassen zum Generieren von Verstärkungssteuerungssignalen für jede der variablen Komponenten mit einem digitalen Controller, der in dem variablen HF-Modulator enthalten ist, basierend auf den bestimmten Parametern.

20. Computerlesbares Medium nach Anspruch 18, wobei die variablen Komponenten entlang des einzelnen Modulationspfades des variablen HF-Modulators die Basisbandfilter, die variablen Basisbandverstärker, variablen HF-Verstärker und Treiberverstärker aufweisen, wobei die Funktionen den programmierbaren Prozessor veranlassen zum:

Dämpfen des HF-Nutzersignals mit einem der variablen HF-Verstärker, der mit dem Frequenzband des ausgewählten Kommunikationsmodus assoziiert ist basierend auf der Parametereinstellung; und

Verstärken des HF-Nutzersignals mit einem der Treiberverstärker, der mit dem Frequenzband des ausgewählten Kommunikationsmodus assoziiert ist basierend auf der Parametereinstellung zum Vorsehen einer ausreichenden Verstärkung und Ausgangsleistung für das Frequenzband des ausgewählten Kommunikationsmodus.

21. Computerlesbares Medium nach Anspruch 18, das weiter Instruktionen aufweist, die den programmierbaren Prozessor veranlassen zum:

Auswählen eines Ausgangsanschlusses des variablen HF-Modulators basierend auf dem ausgewählten Kommunikationsmodus; und

Senden des verarbeiteten Nutzersignals mit ausreichend Verstärkung und Ausgangsleistung für das Frequenzband des ausgewählten Kommunikationsmodus von dem variablen HF-Modulator an einen Sender, der in der Multimodus-WCD enthalten ist, und zwar über den ausgewählten Ausgangsanschluss.

22. Eine Multimodus-Drahtloskommunikationseinrichtung bzw. -WCD (WCD = wireless communication device) (14), die zwei oder mehr Kommunikationsmodi unterstützt, die einen variablen Hochfrequenz- bzw. HF-Modulator (22) aufweisen, der die zwei oder mehr Kommunikationsmodi in einem einzelnen Modulationspfad des variablen HF-Modulators ausführt, wobei der einzelne Modulationspfad konfiguriert ist zum Verarbeiten differenzieller Signale und ein variables In-Phase-Basisband-Filter (45A) und ein variables Quadrature-Basisbandfilter (45B) beinhaltet, die jeweils mit einem entsprechenden variablen In-Phase-Basisbandverstärker (46A) und einem variablen Quadratur-Basisbandverstärker (46B) verbunden sind, die beide mit einem ersten HF-Mischer (47A) für Kommunikationsmodi in einem ersten Frequenzband und einem zweiten HF-Mischer (47B) für Kommunikationsmodi in einem zweiten Frequenzband verbunden sind, wobei die variablen Basisbandfilter und die variablen Basisbandverstärker einen einzelnen rekonfigurierbaren Pfad für jeden der zwei oder mehr Kommunikationsmodi bilden und jeder variable Basisbandverstärker den einen von dem ersten HF-Mischer und den zweiten HF-Mischer speist, der mit einem ausgewählten einen der zwei oder mehr Kommunikationsmodi assoziiert ist, wobei der variable HF-Modulator ein Signal von einem Nutzer der Multimodus-WCD gemäß einem ausgewählten einen der zwei oder mehr Kommunikationsmodi verarbeitet durch Einstellen von Parametern variabler Komponenten entlang des einzelnen Modulationspfades des variablen HF-Modulators basierend auf dem ausgewählten einen der Kommunikationsmodi.

23. Multimodus-WCD nach Anspruch 22, wobei der variable HF-Modulator den CDMA-Kommunikationsmodus (CDMA = code division multiple access) und den GSM-Kommunikationsmodus (GSM = Global System for Mobile Communications) in dem einzelnen Modulationspfad des variablen HF-Modulators ausführt.

24. Multimodus-WCD nach Anspruch 23, wobei der variable HF-Modulator einen CDMA-Modulationspfad des variablen HF-Modulators konfiguriert, um den GSM-Kommunikationsmodus zu unterstützen.

25. Multimodus-WCD nach Anspruch 22, die weiter ein Mobilstationsmodem bzw. MSM (MSM = mobile station modem) aufweist, das einen der zwei oder mehr Kommunikationsmodi auswählt, in dem die Multimodus-WCD arbeiten soll, und zwar basierend auf einem detektierten Dienstsignal.

26. Multimodus-WCD nach Anspruch 25, wobei das MSM ein erstes Dienstsignal sucht, das zu einem ersten der zwei oder mehr Kommunikationsmodi konform ist, die durch die Multimodus-WCD unterstützt werden, und das ein zweites Dienstsignal sucht, das zu einem zweiten der zwei oder mehr Kommunikationsmodi konform ist, wenn die Multimodus-WCD das erste Dienstsignal nicht detektiert.

27. Multimodus-WCD nach Anspruch 26, wobei das erste Dienstsignal zu dem CDMA-Kommunikationsmodus (CDMA = code division multiple access) konform ist und das zweite Dienstsignal zu dem GSM-Kommunikationsmodus (GSM = Global System for Mobile Communications) konform ist.

28. Multimodus-WCD nach Anspruch 22, wobei Parameter der variablen Komponenten ein oder mehreres von Verstärkung, Bandbreite, Bias- bzw. Vorspannungsstrom, Bias- bzw. Vorspannungsspannung und Common-Mode-Spannung aufweisen.

29. Multimodus-WCD (14) nach Anspruch 22, die weiter Folgendes aufweist:

einen Empfänger (20), der ein Dienstsignal detektiert;
ein Mobilstationsmodem bzw. MSM (MSM = mobile station modem) (24), das den Kommunikationsmodus auswählt, in dem die Multimodus-WCD ausgeführt werden soll basierend auf dem detektierten Dienstsignal, und das Parameter und Ausgangsleistung für das Frequenzband des ausgewählten Kommunikationsmodus bestimmt; und
wobei der variable Hochfrequenz- bzw. HF-Modulator (22) einen digitalen Controller (40) beinhaltet, der Parameter variabler Komponenten entlang des einzelnen Modulationspfades des variablen HF-Modulators basierend auf den bestimmten Parametern von dem MSM einstellt, wobei der variable HF-Modulator das Signal von dem Nutzer der WCD gemäß dem ausgewählten Kommunikationsmodus verarbeitet.

30. Multimodus-WCD nach Anspruch 29, wobei das MSM:

einen ersten Kommunikationsmodus auswählt, der durch die Multimodus-WCD unterstützt wird, in dem die Multimodus-WCD ausgeführt werden soll, wenn das detektierte Dienstsignal zu dem ersten Kommunikationsmodus konform ist; und
einen zweiten Kommunikationsmodus auswählt, der durch die Multimodus-WCD unterstützt wird, in dem die Multimodus-WCD ausgeführt werden soll, wenn das detektierte Dienstsignal zu dem zweiten Kommunikationsmodus konform ist.

31. Multimodus-WCD nach Anspruch 29, wobei das MSM:

einen Kommunikationsmodus bestimmt, zu dem das detektierte Dienstsignal konform ist und ein Frequenzband des Kommunikationsmodus, in dem das detektierte Dienstsignal arbeitet;
den Kommunikationsmodus auswählt, in dem die Multimodus-WCD ausgeführt werden soll basierend auf dem Kommunikationsmodus, zu dem das detektierte Dienstsignal konform ist; und
Parameter und Ausgangsleistung für das Frequenzband des Kommunikationsmodus bestimmt, in dem das Dienstsignal arbeitet.

32. Multimodus-WCD nach Anspruch 29, wobei der digitale Controller, der in dem variablen HF-Modulator enthalten ist, Verstärkungssteuerungssignale für jede der variablen Komponenten generiert, und zwar basierend auf den bestimmten Parametern von dem MSM.

33. Multimodus-WCD nach Anspruch 32, wobei der digitale Controller Nachschlagetabellen entsprechend jeder der variablen Komponenten beinhaltet, und Verstärkungssteuerungssignalen für jede der variablen Komponenten mit der jeweiligen einen der Nachschlagetabellen generiert, und zwar basierend auf einem Verstärkungsbereich und einer Verstärkungsrate für jede der variablen Komponenten.

34. Multimodus-WCD nach Anspruch 29, wobei die variablen Komponenten entlang des einzelnen Modulationspfades des variablen HF-Modulators die Basisbandfilter, die variablen Basisbandverstärker, variablen HF-Verstärker und Treiberverstärker aufweist, wobei der digitale Controller:

Parameter der Basisbandfilter über einen Referenzstrom einstellt;

Parameter der variablen Basisbandverstärker einstellt;

Parameter von einem der variablen HF-Verstärker einstellt, der mit dem Frequenzband des ausgewählten Kommunikationsmodus assoziiert ist; und

Parameter von einem der Treiberverstärker einstellt, der mit dem Frequenzband des ausgewählten Kommunikationsmodus assoziiert ist.

35. Multimodus-WCD nach Anspruch 34, wobei:

die Basisbandfilter ein Basisbandnutzersignal basierend auf der Parametereinstellung filtern;

die variablen Basisbandverstärker das Basisbandnutzersignal basierend auf der Parametereinstellung verstärken, um ein Zwischenfrequenznutzersignal zu generieren, und das Zwischenfrequenznutzersignal auf den HF-Mischer anwenden, der mit dem Frequenzband des ausgewählten Kommunikationsmodus assoziiert ist;

der HF-Mischer das Zwischenfrequenznutzersignal und ein HF-Signal von einem Lokaloszillator mischt, um ein HF-Nutzersignal zu generieren;

der eine der variablen HF-Verstärker das HF-Nutzersignal basierend auf der Parametereinstellung dämpft; und

der eine der Treiberverstärker das HF-Nutzersignal basierend auf der Parametereinstellung verstärkt, um ausreichend Verstärkung und Ausgangsleistung für das Frequenzband des ausgewählten Kommunikationsmodus vorzusehen.

36. Multimodus-WCD nach Anspruch 29, wobei der digitale Controller einen Ausgangsanschluss eines Treiberverstärkers auswählt, der in dem variablen HF-Modulator enthalten ist, und zwar basierend auf dem ausgewählten Kommunikationsmodus, und wobei der Treiberverstärker das verarbeitete Nutzersignal mit ausreichend Verstärkung und Ausgangsleistung für das Frequenzband des ausgewählten Kommunikationsmodus dem variablen HF-Modulator an einen Sender sendet, der in der Multimodus-WCD enthalten ist, und zwar über den ausgewählten Ausgangsanschluss.

37. Multimodus-WCD nach Anspruch 29, wobei der HF-Modulator einen Aufwärtswandler aufweist, der Folgendes aufweist:

Basisbandfilter mit Kaskadentransistoren, die ein Basisbandnutzersignal tiefpassfiltern und Kondensatoren, die eine Bandbreite der Basisbandfilter gemäß Parametereinstellungen steuern;

variable Basisbandverstärker mit Transistorpaaren, die Stromspiegel bilden, die das Basisbandnutzersignal von den Basisbandfiltern gemäß Transistorbitschaltelementen verstärken, die durch Parametereinstellungen eingestellt sind; und

erste und zweite HF-Mischer mit Transistorpaaren, die ein Zwischenfrequenznutzersignal von den variablen Basisbandverstärkern mit einem HF-Signal von einem Lokaloszillator mischen, um ein HF-Nutzersignal zu generieren.

38. Multimodus-WCD nach Anspruch 29, wobei der HF-Modulator variable HF-Verstärker mit Transistorbitschaltelementen aufweist, die durch Parametereinstellungen eingestellt sind, um ein HF-Nutzersignal zu dämpfen.

39. Multimodus-WCD nach Anspruch 29, wobei der HF-Modulator Treiberverstärker mit Transistoren aufweist, die Schaltkaskadenstufen mit einem empfangenen HF-Nutzersignal verbinden, wobei die Schaltkaskadenstufen das empfangene HF-Nutzersignal gemäß Parametereinstellungen verstärken, um eine ausreichende Verstärkung und Ausgangsleistung für das Frequenzband des ausgewählten Kommunikationsmodus vorzusehen.

40. Multimodus-WCD nach Anspruch 39, wobei der HF-Modulator Treiberverstärkervorspannungsschaltungen bzw. Treiberverstärker-Bias-Schaltungen mit einer konstanten Transistorschaltung aufweist, die einen Vorspannungs- bzw. Bias-Eingangsstrom für die Treiberverstärker generiert, um thermisches Rauschen in den Treiberverstärkern zu verringern.

41. Multimodus-WCD nach Anspruch 29, wobei die Multimodus-WCD zwei oder mehr Kommunikationsmodi unterstützt.

42. Multimodus-WCD nach Anspruch 29, wobei der ausgewählte Kommunikationsmodus eines von dem CDMA- oder dem GSM-Kommunikationsmodus aufweist.

43. Multimodus-WCD nach Anspruch 29, wobei das Frequenzband des ausgewählten Kommunikationsmodus eines von einem Hochfrequenzband oder einem Niederfrequenzband des ausgewählten Kommunikationsmodus aufweist.

**44.** Multimodus-WCD nach Anspruch 29, wobei Parameter der variablen Komponenten ein oder mehreres von Verstärkung, Bandbreite, Bias-Strom, Bias-Spannung und Common-Mode-Spannung aufweisen.

**Revendications**

**1.** Procédé comprenant les étapes suivantes :

le fonctionnement de deux modes de communication ou plus dans un chemin de modulation unique d'un modulateur à radiofréquence, RF, variable (22) inclus dans un dispositif de communication sans fil, WCD, multimode (14) qui prend en charge les deux modes de communication ou plus, le chemin de modulation unique étant configuré pour traiter des signaux différentiels et comportant un filtre variable en bande de base en phase (45A), un filtre variable en bande de base en quadrature (45B), un amplificateur à gain variable en bande de base en phase (46A), un amplificateur à gain variable en bande de base en quadrature (46B), et un premier mélangeur RF (47A) pour des modes de communication dans une première bande de fréquence et un deuxième mélangeur RF (47B) pour des modes de communication dans une deuxième bande de fréquence, les filtres variables en bande de base et les amplificateurs à gain variable en bande de base formant un chemin reconfigurable unique pour chacun des deux modes de communication ou plus et chaque amplificateur à gain variable en bande de base commandant le mélangeur parmi le premier mélangeur RF et le deuxième mélangeur RF associé à un mode sélectionné parmi les deux modes de communication ou plus ; et
le traitement, dans le chemin de modulation unique, d'un signal provenant d'un utilisateur du WCD multimode conformément au mode sélectionné parmi les deux modes de communication ou plus en réglant des paramètres de composants variables le long du chemin de modulation unique du modulateur à RF variable sur la base du mode sélectionné parmi les modes de communication ; et
dans lequel le traitement d'un signal provenant d'un utilisateur du WCD multimode comprend les étapes suivantes :

le filtrage d'un signal utilisateur en bande de base avec les filtres en bande de base sur la base du réglage des paramètres ;
l'amplification du signal utilisateur en bande de base filtré avec les amplificateurs à gain variable en bande de base sur la base du réglage des paramètres pour générer un signal utilisateur à fréquence intermédiaire ;
l'application du signal utilisateur à fréquence intermédiaire au mélangeur RF associé à la bande de fréquence du mode de communication sélectionné ;
le mélange du signal utilisateur à fréquence intermédiaire et d'un signal RF provenant d'un oscillateur local avec le mélangeur RF pour générer un signal utilisateur RF.

**2.** Procédé selon la revendication 1, dans lequel le fonctionnement de deux modes de communication ou plus comprend le fonctionnement du mode de communication à accès multiple par répartition en code, CDMA, et du mode de communication du système mondial pour les communications mobiles, GSM, dans le chemin de modulation unique du modulateur à RF variable.

**3.** Procédé selon la revendication 2, comprenant en outre la configuration d'un chemin de modulation CDMA du modulateur à RF variable pour prendre en charge le mode de communication GSM.

**4.** Procédé selon la revendication 1, comprenant en outre la sélection d'un des deux modes de communication ou plus dans lequel faire fonctionner le WCD multimode sur la base d'un signal de service détecté.

**5.** Procédé selon la revendication 4, comprenant en outre les étapes suivantes :

la recherche d'un premier signal de service conforme à un premier des deux modes de communication ou plus pris en charge par le WCD multimode ; et
la recherche d'un deuxième signal de service conforme à un deuxième des deux modes de communication ou plus quand le WCD multimode ne détecte pas le premier signal de service.

**6.** Procédé selon la revendication 5, dans lequel le premier signal de service est conforme au mode de communication à accès multiple par répartition en code, CDMA, et le deuxième signal de service est conforme au mode de communication du système mondial de communications mobiles, GSM.

7.  Procédé selon la revendication 1, comprenant en outre les étapes suivantes :

> la sélection dudit mode de communication dans lequel faire fonctionner ledit dispositif de communication sans fil, WCD, multimode sur la base d'un signal de service détecté ;
> la détermination desdits paramètres et puissance de sortie pour ladite bande de fréquence du mode de communication sélectionné ;
> le réglage desdits paramètres de composants variables le long dudit chemin de modulation unique dudit modulateur à radiofréquence, RF, variable inclus dans le WCD multimode sur la base des paramètres déterminés ; et
> le traitement dudit signal provenant dudit utilisateur du WCD multimode avec le modulateur à RF variable conformément au mode de communication sélectionné.

8.  Procédé selon la revendication 7, dans lequel la sélection du mode de communication comprend les étapes suivantes :

> la sélection d'un premier mode de communication pris en charge par le WCD multimode dans lequel faire fonctionner le WCD multimode quand le signal de service détecté est conforme au premier mode de communication ; et
> la sélection d'un deuxième mode de communication pris en charge par le WCD multimode dans lequel faire fonctionner le WCD multimode quand le signal de service détecté est conforme au deuxième mode de communication.

9.  Procédé selon la revendication 7, comprenant en outre les étapes suivantes :

> la détermination d'un mode de communication auquel le signal de service détecté est conforme et une bande de fréquence du mode de communication dans lequel le signal de service détecté fonctionne ;
> la sélection du mode de communication dans lequel faire fonctionner le WCD multimode sur la base du mode de communication auquel le signal de service détecté est conforme ; et
> la détermination de paramètres et puissance de sortie pour la bande de fréquence du mode de communication dans lequel le signal de service fonctionne.

10. Procédé selon la revendication 7, dans lequel le réglage de paramètres des composants variables le long du chemin de modulation unique du modulateur à RF variable comprend la génération de signaux de commande de gain pour chacun des composants variables avec un contrôleur numérique inclus dans le modulateur à RF variable sur la base des paramètres déterminés.

11. Procédé selon la revendication 10, dans lequel le contrôleur numérique comporte des tables de correspondance correspondant à chacun des composants variables, et dans lequel la génération de signaux de commande de gain comprend la génération de signaux de commande de gain pour chacun des composants variables avec la table respective parmi les tables de correspondance sur la base d'une plage de gain et d'un taux de gain pour chacun des composants variables

12. Procédé selon la revendication 7, dans lequel les composants variables le long du chemin de modulation unique du modulateur à RF variable comprennent des filtres en bande de base, des amplificateurs à gain variable en bande de base, des amplificateurs RF à gain variable, et des amplificateurs d'attaque, dans lequel le réglage des paramètres des composants variables comprend les étapes suivantes :

> le réglage de paramètres des filtres en bande de base via un courant de référence ;
> le réglage de paramètres des amplificateurs à gain variable en bande de base ;
> le réglage de paramètres d'un des amplificateurs RF à gain variable associé à la bande de fréquence du mode de communication sélectionné ; et
> le réglage de paramètres d'un des amplificateurs d'attaque associé à la bande de fréquence du mode de communication sélectionné.

13. Procédé selon la revendication 12, dans lequel le traitement d'un signal provenant d'un utilisateur du WCD multimode comprend en outre les étapes suivantes :

l'atténuation du signal utilisateur RF avec ledit un des amplificateurs RF à gain variable sur la base du réglage des paramètres ; et

l'amplification du signal utilisateur RF avec ledit un des amplificateurs d'attaque sur la base du réglage des paramètres pour fournir des gain et puissance de sortie suffisants pour la bande de fréquence du mode de communication sélectionné.

**14.** Procédé selon la revendication 7, comprenant en outre les étapes suivantes :

la sélection d'un port de sortie du modulateur à RF variable sur la base du mode de communication sélectionné ; et

l'envoi du signal utilisateur traité avec des gain et puissance de sortie suffisants pour la bande de fréquence du mode de communication sélectionné à partir du modulateur à RF variable à un émetteur inclus dans le WCD multimode via le port de sortie sélectionné.

**15.** Support lisible par ordinateur comprenant des instructions qui amènent le processeur programmable à :

faire fonctionner deux modes de communication ou plus dans un chemin de modulation unique d'un modulateur à radiofréquence, RF, variable (22) inclus dans un dispositif de communication sans fil multimode, WCD, (14) qui prend en charge les deux modes de communication ou plus, le chemin de modulation unique étant configuré pour traiter des signaux différentiels et comportant un filtre variable en bande de base en phase (45A), un filtre variable en bande de base en quadrature (45B), un amplificateur à gain variable en bande de base en phase (46A), un amplificateur à gain variable en bande de base en quadrature (46B), et un premier mélangeur RF (47A) pour des modes de communication dans une première bande de fréquence et un deuxième mélangeur RF (47B) pour des modes de communication dans une deuxième bande de fréquence, les filtres variables en bande de base et les amplificateurs à gain variable en bande de base formant un chemin reconfigurable unique pour chacun des deux modes de communication ou plus et chaque amplificateur à gain variable en bande de base commandant le mélangeur parmi le premier mélangeur RF et le deuxième mélangeur RF associé à un mode sélectionné parmi les deux modes de communication ou plus ; et

traiter, dans le chemin de modulation unique, un signal provenant d'un utilisateur du WCD conformément à un mode sélectionné parmi les deux modes de communication ou plus en réglant des paramètres de composants variables le long du chemin de modulation unique du modulateur à RF variable sur la base du mode sélectionné parmi les modes de communication ; et

dans lequel les instructions amènent le processeur programmable à :

filtrer un signal utilisateur en bande de base avec les filtres en bande de base sur la base du réglage des paramètres via un courant de référence ;

amplifier le signal utilisateur en bande de base filtré avec les amplificateurs à gain variable en bande de base sur la base du réglage des paramètres pour générer un signal utilisateur à fréquence intermédiaire ;

appliquer le signal utilisateur à fréquence intermédiaire à un mélangeur RF associé à la bande de fréquence du mode de communication sélectionné ;

mélanger le signal utilisateur à fréquence intermédiaire et un signal RF provenant d'un oscillateur local avec le mélangeur RF pour générer un signal utilisateur RF.

**16.** Support lisible par ordinateur selon la revendication 15, comprenant en outre des instructions qui amènent le processeur programmable à sélectionner un des deux modes de communication ou plus dans lequel faire fonctionner le WCD multimode sur la base d'un signal de service détecté.

**17.** Support lisible par ordinateur selon la revendication 16, comprenant en outre des instructions qui amènent le processeur programmable à :

rechercher un premier signal de service conforme à un premier des deux modes de communication ou plus pris en charge par le WCD multimode ; et

rechercher un deuxième signal de service conforme à un deuxième des deux modes de communication ou plus quand le WCD multimode ne détecte pas le premier signal de service.

**18.** Support lisible par ordinateur selon la revendication 15, comprenant en outre des instructions qui amènent le processeur programmable à :

sélectionner le mode de communication dans lequel faire fonctionner le dispositif de communication sans fil, WCD, multimode sur la base d'un signal de service détecté ;

déterminer les paramètres et puissance de sortie pour la bande de fréquence du mode de communication sélectionné ;

régler les paramètres de composants variables le long du chemin de modulation unique du modulateur à radiofréquence, RF, variable inclus dans le WCD multimode sur la base des paramètres déterminés ; et

traiter le signal provenant de l'utilisateur du WCD multimode avec le modulateur à RF variable conformément au mode de communication sélectionné.

19. Support lisible par ordinateur selon la revendication 18, dans lequel les instructions amènent le processeur programmable à générer des signaux de commande de gain pour chacun des composants variables avec un contrôleur numérique inclus dans le modulateur à RF variable sur la base des paramètres déterminés.

20. Support lisible par ordinateur selon la revendication 18, dans lequel les composants variables le long du chemin de modulation unique du modulateur à RF variable comprennent les filtres en bande de base, les amplificateurs à gain variable en bande de base, les amplificateurs RF à gain variable, et les amplificateurs d'attaque, dans lequel les instructions amènent le processeur programmable à :

atténuer le signal utilisateur RF avec un des amplificateurs RF à gain variable associé à la bande de fréquence du mode de communication sélectionné sur la base du réglage des paramètres ; et

amplifier le signal utilisateur RF avec un des amplificateurs d'attaque associé à la bande de fréquence du mode de communication sélectionné sur la base du réglage des paramètres pour fournir des gain et puissance de sortie suffisants pour la bande de fréquence du mode de communication sélectionné.

21. Support lisible par ordinateur selon la revendication 18, comprenant en outre des instructions qui amènent le processeur programmable à :

sélectionner un port de sortie du modulateur à RF variable sur la base du mode de communication sélectionné ; et

envoyer le signal utilisateur traité avec des gain et puissance de sortie suffisants pour la bande de fréquence du mode de communication sélectionné à partir du modulateur à RF variable à un émetteur inclus dans le WCD multimode via le port de sortie sélectionné.

22. Dispositif de communication sans fil multimode, WCD, (14) qui prend en charge deux modes de communication ou plus comprenant un modulateur à radiofréquence, RF, variable (22) qui fournit les deux modes de communication ou plus dans un chemin de modulation unique du modulateur à RF variable, le chemin de modulation unique étant configuré pour traiter des signaux différentiels et comportant un filtre variable en bande de base en phase (45A) et un filtre variable en bande de base en quadrature (45B) connecté chacun à un amplificateur à gain variable en bande de base en phase (46A) et à un amplificateur à gain variable en bande de base en quadrature (46B) qui sont tous deux connectés à un premier mélangeur RF (47A) pour des modes de communication dans une première bande de fréquence et à un deuxième mélangeur RF (47B) pour des modes de communication dans une deuxième bande de fréquence, les filtres variables en bande de base et les amplificateurs à gain variable en bande de base formant un chemin reconfigurable unique pour chacun des deux modes de communication ou plus et chaque amplificateur à gain variable en bande de base commandant le mélangeur parmi le premier mélangeur RF et le deuxième mélangeur RF associé à un mode sélectionné parmi les deux modes de communication ou plus, dans lequel le modulateur à RF variable traite un signal provenant d'un utilisateur du WCD multimode conformément à un mode sélectionné parmi les deux modes de communication ou plus en réglant des paramètres de composants variables le long du chemin de modulation unique du modulateur à RF variable sur la base du mode sélectionné parmi les modes de communication.

23. WCD multimode selon la revendication 22, dans lequel le modulateur à RF variable active le mode de communication à accès multiple par répartition en code, CDMA, et le mode de communication du système mondial pour les communications mobiles, GSM, dans le chemin de modulation unique du modulateur à RF variable.

24. WCD multimode selon la revendication 23, dans lequel le modulateur à RF variable configure un chemin de modulation CDMA du modulateur à RF variable pour prendre en charge le mode de communication GSM.

25. WCD multimode selon la revendication 22, comprenant en outre un modem de station mobile, MSM, qui sélectionne un mode parmi les deux modes de communication ou plus dans lequel faire fonctionner le WCD multimode sur la base d'un signal de service détecté.

26. WCD multimode selon la revendication 25, dans lequel le MSM recherche un premier signal de service conforme à un premier des deux modes de communication ou plus pris en charge par le WCD multimode, et recherche un deuxième signal de service conforme à un deuxième des deux modes de communication ou plus quand le WCD multimode ne détecte pas le premier signal de service.

27. WCD multimode selon la revendication 26, dans lequel le premier signal de service est conforme au mode de communication à accès multiple par répartition en code, CDMA, et le deuxième signal de service est conforme au mode de communication du système mondial pour des communications mobiles, GSM.

28. WCD multimode selon la revendication 22, dans lequel des paramètres des composants variables comprennent un ou plusieurs éléments parmi le gain, la bande passante, le courant de polarisation, la tension de polarisation, et la tension de mode commun.

29. WCD multimode (14) selon la revendication 22, comprenant en outre :

un récepteur (20) qui détecte un signal de service ;
un modem de station mobile, MSM, (24) qui sélectionne le mode de communication dans lequel faire fonctionner le WCD multimode sur la base du signal de service détecté, et qui détermine des paramètres et puissance de sortie pour la bande de fréquences du mode de communication sélectionné ; et
le modulateur à radiofréquence, RF, variable (22) comportant un contrôleur numérique (40) qui règle des paramètres de composants variables le long du chemin de modulation unique du modulateur à RF variable sur la base des paramètres déterminés provenant du MSM, dans lequel le modulateur à RF variable traite le signal provenant d'un utilisateur du WCD conformément au mode de communication sélectionné.

30. WCD multimode selon la revendication 29, dans lequel le MSM :

sélectionne un premier mode de communication pris en charge par le WCD multimode dans lequel faire fonctionner le WCD multimode quand le signal de service détecté est conforme au premier mode de communication ; et
sélectionne un deuxième mode de communication pris en charge par le WCD multimode dans lequel faire fonctionner le WCD multimode quand le signal de service détecté est conforme au deuxième mode de communication.

31. WCD multimode selon la revendication 29, dans lequel le MSM :

détermine un mode de communication auquel le signal de service détecté est conforme et une bande de fréquence du mode de communication dans lequel le signal de service détecté fonctionne ;
sélectionne le mode de communication dans lequel faire fonctionner le WCD multimode sur la base du mode de communication auquel le signal de service détecté est conforme ; et
détermine des paramètres et puissance de sortie pour la bande de fréquence du mode de communication dans lequel le signal de service fonctionne.

32. WCD multimode selon la revendication 29, dans lequel le contrôleur numérique inclus dans le modulateur à RF variable génère des signaux de commande de gain pour chacun des composants variables sur la base des paramètres déterminés provenant du MSM.

33. WCD multimode selon la revendication 32, dans lequel le contrôleur numérique comporte des tables de correspondance correspondant à chacun des composants variables, et génère les signaux de commande de gain pour chacun des composants variables avec la table respective parmi les tables de correspondance sur la base d'une plage de gain et d'un taux de gain pour chacun des composants variables

34. WCD multimode selon la revendication 29, dans lequel les composants variables le long du chemin de modulation unique du modulateur à RF variable comprennent les filtres en bande de base, les amplificateurs à gain variable en bande de base, des amplificateurs RF à gain variable, et des amplificateurs d'attaque, dans lequel le contrôleur numérique :

règle des paramètres des filtres en bande de base via un courant de référence ;
règle des paramètres des amplificateurs à gain variable en bande de base ;
règle des paramètres d'un des amplificateurs RF à gain variable associé à la bande de fréquence du mode de communication sélectionné ; et
règle des paramètres d'un des amplificateurs d'attaque associé à la bande de fréquence du mode de communication sélectionné.

**35.** WCD multimode selon la revendication 34, dans lequel :

les filtres en bande de base filtrent un signal utilisateur en bande de base sur la base du réglage des paramètres ;
les amplificateurs à gain variable en bande de base amplifient le signal utilisateur en bande de base sur la base du réglage des paramètres pour générer un signal utilisateur à fréquence intermédiaire, et appliquent le signal utilisateur à fréquence intermédiaire au mélangeur RF associé à la bande de fréquence du mode de communication sélectionné ;
le mélangeur RF mélange le signal utilisateur à fréquence intermédiaire et un signal RF provenant d'un oscillateur local pour générer un signal utilisateur RF ;
ledit un amplificateur parmi les amplificateurs RF à gain variable atténue le signal utilisateur RF sur la base du réglage des paramètres ; et
ledit un amplificateur parmi les amplificateurs d'attaque amplifie le signal utilisateur RF sur la base du réglage des paramètres pour fournir des gain et puissance de sortie suffisants pour la bande de fréquence du mode de communication sélectionné.

**36.** WCD multimode selon la revendication 29, dans lequel le contrôleur numérique sélectionne un port de sortie d'un amplificateur d'attaque inclus dans le modulateur à RF variable sur la base du mode de communication sélectionné, et dans lequel l'amplificateur d'attaque envoie le signal utilisateur traité avec des gain et puissance de sortie suffisants pour la bande de fréquence du mode de communication sélectionné à partir du modulateur à RF variable à un émetteur inclus dans le WCD multimode via le port de sortie sélectionné.

**37.** WCD multimode selon la revendication 29, dans lequel le modulateur à RF comporte un convertisseur élévateur comprenant :

des filtres en bande de base avec des transistors en cascade qui filtrent passe-bas un signal utilisateur en bande de base et des condensateurs qui contrôlent une bande passante des filtres en bande de base conformément à des réglages des paramètres ;
des amplificateurs à gain variable en bande de base avec des paires de transistors formant des miroirs de courant qui amplifient le signal utilisateur en bande de base provenant des filtres en bande de base conformément à des commutateurs de bits à transistor réglés par des réglages des paramètres ; et
des premier et deuxième mélangeurs RF avec des paires de transistors qui mélangent un signal utilisateur à fréquence intermédiaire provenant des amplificateurs à gain variable en bande de base avec un signal RF provenant d'un oscillateur local pour générer un signal utilisateur RF.

**38.** WCD multimode selon la revendication 29, dans lequel le modulateur à RF comporte des amplificateurs RF à gain variable avec des commutateurs de bits à transistor réglés par des réglages de paramètres pour atténuer un signal utilisateur RF.

**39.** WCD multimode selon la revendication 29, dans lequel le modulateur à RF comporte des amplificateurs d'attaque avec des transistors qui connectent des étages de cascade à commutateurs à un signal utilisateur RF reçu, dans lequel les étages de cascade à commutateurs amplifient le signal utilisateur RF reçu conformément à des réglages des paramètres pour fournir des gain et puissance de sortie suffisants pour la bande de fréquences du mode de communication sélectionné.

**40.** WCD multimode selon la revendication 39, dans lequel le modulateur à RF comporte des circuits de polarisation d'amplificateur d'attaque avec un circuit constant à transistor qui génère un courant d'entrée de polarisation pour les amplificateurs d'attaque pour réduire un bruit thermique dans les amplificateurs d'attaque.

**41.** WCD multimode selon la revendication 29, dans lequel le WCD multimode prend en charge deux modes de communication ou plus.

**42.** WCD multimode selon la revendication 29, dans lequel le mode de communication sélectionné comprend un mode parmi le mode de communication à accès multiple par répartition en code, CDMA, ou le mode de communication du système mondial pour des communications mobiles, GSM.

**43.** WCD multimode selon la revendication 29, dans lequel la bande de fréquence du mode de communication sélectionné comprend une bande parmi une bande haute fréquence ou une bande basse fréquence du mode de communication sélectionné.

**44.** WCD multimode selon la revendication 29, dans lequel des paramètres des composants variables comprennent un ou plusieurs éléments parmi le gain, la bande passante, le courant de polarisation, la tension de polarisation, et la tension de mode commun.

**FIG. 1**

# FIG. 2

**VARIABLE RF MODULATOR**
**22**

**MOBILE STATION MODEM**
**24**

LO SYSTEM
42

UP-CONVERTER
44

| MIXERS 47 | BASEBAND VGAs 46 | BASEBAND FILTERS 45 |

DAC
38

DIGITAL AMPLIFIER
36

USER SIGNAL

RF VGAs
48

REFERENCE CURRENT
41

EXTERNAL POWER AMPLIFIER
52

DRIVER AMPLIFIERS
50

DIGITAL CONTROLLER
40

VOLTAGE PDM
34

POWER CONTROLLER
30

SBI
32

EP 1 925 094 B1

MOBILE STATION MODEM  **56**

SELECT COMMUNICATION MODE FOR MULTI-MODE WCD BASED ON DETECTED SERVICE SIGNAL

**58**

DETERMINE GAIN AND OUTPUT POWER FOR FREQUENCY BAND OF SELECTED COMMUNICATION MODE

**60**

SEND DETERMINED GAIN TO DIGITAL CONTROLLER IN VARIABLE RF MODULATOR

**62**

SEND BASEBAND SIGNAL TO UP-CONVERTER IN VARIABLE RF MODULATOR

VARIABLE RF MODULATOR  **64**

SET GAIN OF VARIABLE COMPONENTS IN RF MODULATOR WITH DIGITAL CONTROLLER BASED ON DETERMINED GAIN

**66**

LOW PASS FILTER BASEBAND SIGNAL WITH BASEBAND FILTERS BASED ON GAIN SETTING

**68**

AMPLIFY OR ATTENUATE BASEBAND SIGNAL WITH BASEBAND VGAs BASED ON GAIN SETTING

**70**

GENERATE RF SIGNAL FROM INTERMEDIATE FREQUENCY SIGNAL WITH MIXER ASSOCIATED WITH FREQUENCY BAND

**72**

AMPLIFY OR ATTENUATE RF SIGNAL FROM MIXER WITH ONE OF RF VGAs BASED ON GAIN SETTING

**74**

AMPLIFY OR ATTENUATE RF SIGNAL WITH ONE OF DRIVER AMPLIFIERS BASED ON GAIN SETTING

**76**

SELECT OUTPUT PORT OF ONE OF DRIVER AMPLIFIERS BASED ON SELECTED COMMUNICATION MODE

**78**

**FIG. 3**    SEND SIGNAL WITH SUFFICIENT GAIN AND OUTPUT POWER TO TRANSMITTER VIA SELECTED OUTPUT PORT

FIG. 4

40

from SBI

Vpdm → ADC 110 → MUX 112 →

LOOK-UP TABLES 114

BASEBAND FILTER LUT 116 → to BB FILTER

BASEBAND VGA LUT 117 → to BB VGA

RF VGA LUT 118 → to RF VGA

DRIVER AMPLIFIER LUT 119 → to DA

**FIG. 5**

**FIG. 6**

44B

Idacp    Idacm

vcm
pad

45A

M1    C1    M2

vcm
drain    vcm
drain

Imixp    Imixm

R1    R2

C2

M3    M4

46A

47A

**FIG. 7**

130

Vdd

Ibias

Vinp

Vinm

R          R

M1          M2

Vop     Vom

M3          M4

**FIG. 8**

89, 90
93, 94

Vdd

Ibias

R

R

Vinp

Vinm

136

M1    M2

Vlop   Vlom

M3    M4

**FIG. 9**

95

Ioutp                    Ioutm

vga
gain

C2          L        L          C2

C1

Iinp                     Iinm

FIG. 10

48A

lout
dump

Ioutm

138

4x    2x    1x          1x    2x    4x

d2b   d1b   d0b          d0    d1    d2

140          Iinm          142

lout
dump

Ioutp

144

4x    2x    1x          1x    2x    4x

d2b   d1b   d0b          d0    d1    d2

146          Iinp          148

FIG. 11

FIG. 12

EP 1 925 094 B1

**FIG. 13**

EP 1 925 094 B1

EP 1 925 094 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003078011 A1
- US 2005168281 A1
- US 2003193923 A1
- US 20040229592 A1